# EUROPÄISCHE PATENTSCHRIFT

(11) **EP 3 096 634 B1**
(45) Veröffentlichungstag und Bekanntmachung des Hinweises auf die Patenterteilung: **28.07.2021**
(21) Anmeldenummer: 15705509.6
(22) Anmeldetag: 20.01.2015
(51) Int. Cl.: A23K 20/28, A23K 50/80

(54) **VERWENDUNG VON TONMINERAL ALS FUTTERZUSATZSTOFF UND/ODER ALS ERGÄNZUNGSFUTTER FÜR GARNELEN**
USE OF CLAY MINERAL AS A FOOD ADDITIVE AND/OR AS SUPPLEMENTARY FOOD FOR SHRIMPS
UTILISATION DE MINÉRAL ARGILEUX COMME COMPLÉMENT ALIMENTAIRE ET/OU COMME ALIMENT COMPLÉMENTAIRE POUR DES CREVETTES

(30) Priorität: 20.01.2014 DE 102014200922
(43) Veröffentlichungstag der Anmeldung: 30.11.2016
(73) Patentinhaber: Universität Rostock, 18055 Rostock (DE); FIM Biotech GmbH, 10117 Berlin (DE)
(72) Erfinder: PALM, Harry W., 18069 Rostock (DE); SÖRENSEN, Hendrik, 25923 Süderlügum (DE); KNAUS, Ulrich, 18107 Elmenhorst / Lichtenhagen (DE); DALLWIG, Rainer, 14476 Potsdam (DE)
(74) Vertreter: Maikowski & Ninnemann Patentanwälte Partnerschaft mbB
(86) Internationale Anmeldenummer: PCT/EP2015/051013
(87) Internationale Veröffentlichungsnummer: WO 2015/107218

(56) Entgegenhaltungen:
- EP-A1- 2 674 397
- JP-A- S58 146 243
- US-A- 4 393 087
- US-A- 4 950 488
- US-A- 6 054 146
- US-A1- 2011 046 085
- US-A1- 2011 293 736
- US-A1- 2014 017 272
- W.-K. NG ET AL: "Palm oil-laden spent bleaching clay as a substitute for marine fish oil in the diets of Nile tilapia, Oreochromis niloticus", AQUACULTURE NUTRITION, Bd. 12, Nr. 6, 1. Dezember 2006 (2006-12-01), Seiten 459-468, XP055182953, ISSN: 1353-5773, DOI: 10.1111/j.1365-2095.2006.00449.x
- KATHERINE ZYCHOWSKI ET AL: "The Effect of Aflatoxin-B1 on Red Drum (Sciaenops ocellatus) and Assessment of Dietary Supplementation of NovaSil for the Prevention of Aflatoxicosis", TOXINS, Bd. 5, Nr. 9, 16. September 2013 (2013-09-16), Seiten 1555-1573, XP055182939, ISSN: 2072-6651, DOI: 10.3390/toxins5091555
- R W Ellis ET AL: "Reduction of the bioavailability of 20 [mu]g/kg aflatoxin in trout feed containing clay", Aquaculture, 1. März 2000 (2000-03-01), Seiten 179-188, XP055182971, Gefunden im Internet: URL:http://www.sciencedirect.com/science/a rticle/pii/S0044848699002926/pdfft?md5=30f fed68a68dfef97c36473dac186520&pid=1-s2.0-S 0044848699002926-main.pdf [gefunden am 2015-04-14]
- DAVID J. BOOTH: "Effects of dietary and free bentonite on ammonia buildup in aquarium fish", AUSTRALASIAN JOURNAL OF ECOTOXICOLOGY, Bd. 5, Nr. 2, 1. Juli 1999 (1999-07-01), Seiten 149-152, XP055183005,
- None

## Beschreibung

Die vorliegende Erfindung betrifft die Verwendung von mindestens einem Tonmineral als Futterzusatzstoff gemäß Anspruch 1.

### Beschreibung

Es ist bekannt, dass die Kultivierung aquatischer Organismen in der Aqua- bzw. Marikultur mit dem Ausbruch von Krankheiten und hohen Sterblichkeitsraten einhergehen kann. Wesentliche Verursacher von erhöhten Sterblichkeitsraten sind Virus- und Bakterienerkrankungen, welche aus der Umgebung übertragen werden. Ein weiterer Übertragungsweg ist über das Futter bzw. das Zusammenwirken von über das Futter eingebrachten Toxinen und Pathogenen.

Trotz großer Forschungsanstrengungen lassen sich bei im Freiland gezüchteten aquatischen Organismen ernste Krankheitsausbrüche aufgrund der Komplexität der aquatischen Ökosysteme nicht verhindern. Bakteriosen und Virosen aquatischer Organismen brechen über den direkten Kontakt der Pathogene mit den Körperzellen, häufig im Gastrointestinaltrakt, aus. Es ist auch bekannt, dass eine geschwächte Darmwand (durch parasitische Organismen, Toxine, Immunstatus) eine Eintrittsstelle für Krankheitserreger ist.

Untersuchungen und Anwendungen mit Tonmineralien haben bereits gezeigt, dass die Zufuhr von Tonmineralen bei der intensiven Tiermast (Schwein, Rind, Vogel) positive Auswirkungen auf die Tiergesundheit und somit auf das Wachstum hat.

Auch in der Humanmedizin werden Tonminerale bei unterschiedlichen Indikationen eingesetzt und können als Carrier für z.B. Vitamine verwendet werden. Weiterhin ist der positive Effekt von Tonmineralen bei Darmbeschwerden des Menschen bekannt, und ist Gegenstand der Entwicklung von Therapeutika gegen chronischen Darmerkrankungen.

Auch verfügen Tonmineralien wie das Montmorillonit über die Fähigkeit in der Futtermittelindustrie aufgrund unsachgemäßer Verfahren und Lagerung anfallende Mykotoxine quantitativ zu binden. Diese wirken somit entgiftend und verhindern einen direkten Einfluss der Toxine auf den Organismus. In der Aquakultur ist der Einsatz von Tonmineralen als Mykotoxinadsorber hingegen bisher keine gängige Praxis.

EP 2 674 397 A1 beschreibt ein Verfahren zum Herstellen eines modifizierten Tonminerals, wobei Makroalgen in das Tonmineral interkaliert sind. Diese Zusammensetzung kann unter anderem als Futterzusatzstoff für Fische verwendet werden

JP 58 14 62 43 betrifft die Zugabe eines Tonminerals zu einem konventionellen Futterstoff für aquatische Organismen. Hierbei werden 10 bis 20 % des Tonminerals dem Futterstoff zugesetzt.

US 4,393,087 beschreibt ein Verfahren zur Herstellung eines schwimmenden, aquatischen Futterpellets. Zu diesem Zweck wird zunächst eine erste Mischung aus einem proteinhaltigen mehligen Material mit Fett gebildet, separat wird eine härtbare Kohlenhydratmatrix ausgebildet und diese Matrix wird mit der ersten Mischung kombiniert und die kombinierte Matrix wird unter Verwendung von Wärme und Druck pelletiert.

US 6,054,146 betrifft eine Fischfutterzusammensetzung basierend auf einem Wachs. Hierbei wird das Fischfutter und ein Wasser expandierendes Material (wie z.B. ein Ton) in einer Wachsmatrix homogen verteilt. Das Wachs schützt das Fischfutter und den Ton vor einer frühzeitigen Freisetzung durch das Wasser in einem Fischaquarium.

NG et al. ("Palm oil-laden spent bleaching clay as a substitute for marine fish oil in the diets of Nile tilapia, Oreochromis niloticus", Aquaculture Nutrition, 2006, Seite 459 bis 468) untersucht die Effekte von mit Palmöl beladenem Tonmineral (SBC) zur Substitution von Fischöl in Futterstoffen des Fisches Oreochromis niloticus. Die Studie zeigte, dass der mit Öl beladene Ton das zugefügte Fischöl vollständig ersetzen kann. Zusätzliche potentielle Vorteile sind die Entfernung von Mycotoxinen im Fischfutter und die Absorption von toxischen Substanzen aus dem Wasser.

Zychowski et al. ("The Effect of Aflatoxin-B1 on Red Drum and Assessment of Dietary Supplementation of NovaSil for the Prevention of Aflatoxicosis", TOXINS, 2013, Seite 1555-1573) betrifft Untersuchungen zur Entfernung von Aflatoxinen aus in Aquakultur herangezogenen Fischen durch Zugabe von NovaSil, einem Kalziummontmorinolith-Ton. Durch die Zugabe des Tons zum Fischfutter für die Fischart Roter Trommler verbesserten sich unter anderem die Gewichtszunahme, die Futterverwertung und andere physiologische Werte der behandelten Fische

Ellis et al. ("Reduction of the bioavailability of 20 µg/kg aflatoxin in trout feed containing clay", Aquaculture, 2000, Seiten 179-188) untersucht die Absorption, Metabolismus und Ausscheidung von Aflatoxin-B von Forellen, denen unterschiedliche Futterstoffe verabreicht wurden. So wurden dem Fischfutter 2% Sodiumbentonit zugegeben, welches zu einer Blockierung der intestinalen Absorption von Aflatoxinen führte.

David Booth ("Effects of dietary and free bentonite on ammonia buildup in aquarium fish, AUSTRALASIAN JOURNAL OF ECOTOXICOLOGY, 1999, Seiten 149 bis 152) beschreibt eine Reihe von Experimenten, die die Verwendung von Smektitbentonit zur Reduzierung der Ammoniakanreicherung in Eastern Rainbow Fish untersuchen. Dabei zeigte sich, dass durch Zugabe von Bentonit die Ammoniakkonzentration reduziert wurde.

Aufgrund des weltweit steigenden Konsums an aquatischen Organismen wie Fischen und Garnelen steigt die Verbreitung an intensiver Aquakultur und die damit verbundenen gesundheitlichen Probleme und Risiken für die aquatischen Organismen, denen derzeit überwiegend durch die Verabreichung von Antibiotika und ähnlichen Wirkstoffen versucht wird zu begegnen. Eine Verabreichung von Antibiotika erhöht allerdings das Risiko von Resistenzen in den aquatischen Organismen selbst, aber auch beim Menschen, der diese teilweise über die Nahrungskette zu sich nimmt.

Es besteht daher ein großer Bedarf nach alternativen Substanzen, die die genannten Probleme nicht aufweisen. Entsprechend liegt der vorliegenden Erfindung das Problem zugrunde, eine Verbindung bzw. Wirkstoffzusammensetzung zur Reduktion der toxischen Wirkung von aquatischen Pathogenen im Organismus zur Verfügung zu stellen.

Diese Aufgabe wird durch die Verwendung eines Tonminerals gemäß Anspruch 1 gelöst.

Entsprechend wird erfindungsgemäß mindestens ein Wechsellagerungstonmineral aus Montmorillonit und Illit/Muskovit als Futterzusatzstoff und/oder als Ergänzungsfutter für Garnelen bereitgestellt, wobei das Wechsellagerungstonmineral vor seiner Verwendung auf eine mittlere Teilchengröße von 0,1 und 10 µm zerkleinert wird, thermisch bei einer Temperatur zwischen 50 °C und 200°C über einen Zeitraum von 10 bis 60 min behandelt wird, und wobei 2 Gew% des Wechsellagerungstonminerals aus Montmorillonit und Illit/Muskovit bezogen auf die Gesamtmenge eines den für Garnelen zugeführten Futtermittels verabreicht werden.

Überraschenderweise hat sich herausgestellt, dass durch die Verabreichung von des Wechsellagerungstonminerals aus Montmorillonit und Illit/Muskovit als Futterzusatzstoff die Überlebensrate von Garnelen unter Hälterungsbedingungen erhöht wird. Zudem lassen sich auf diese Weise Toxine im Futtermittel eliminieren und gewünschte Fütterungskomponenten wie Algen oder deren Inhaltstoffe sowie Proteinkomponenten mit gewünschter Wirkungsweise in die Organismen transferieren. Es ist nunmehr möglich, für die in intensiver Aquakultur gehaltenen Organismen einen Futterzusatz zur Verfügung zu stellen, der etwa durch die Bindung toxischer oder schädlicher Stoffe, die sich entweder im Wasser oder in der Nahrung befinden, oder die erst im Organismus gebildet werden (Endotoxine), die Verbesserung des Gesundheitsstatus begünstigt. Bevorzugt wird das vorliegende Tonmineral zur prophylaktischen Stärkung des Immunsystems, zur Verhinderung von bakteriellen und viralen Infektionen sowie zur Verbesserung des Gesundheitsstatus unter nachteiligen Wasserqualitäten in der Aqua/Marikultur verwendet.

Es ist möglich, Tonmineral in einer Menge von mindestens 1 Gew%, bevorzugt von mindestens 1.5 Gew%, insbesondere bevorzugt von mindestens 2 Gew% bezogen auf die Gesamtmenge eines ebenfalls den aquatischen Organsimen zugeführten Futtermittels zu verabreichen. Die Menge an verabreichten Tonmineral ist dabei insbesondere abhängig von der Art des aquatischen Organismus, an den das Tonmineral verfüttert wird. Erfindundgsgemäß liegt die Menge an verabreichten Wechsellagerungstonmineral aus Montmorillonit und Illit/Muskovit I im Falle von Garnelen bei 2 Gew% .

Das Tonmineral kann entweder separat in das Wasser eingebracht werden, in Lebendfutter angereichert werden oder aber bevorzugt vermischt mit einem Futtermittel für aquatische Organismen verabreicht werden.

Entsprechend wird ein Futtermittel für Garnelen bereitgestellt, welches mindestens ein Wechsellagerungstonmineral aus Montmorillonit und Illit/Muskovit umfasst. Hierfür wird das Tonmineral mit einem Futtermittel vermischt und die gebildete Mischung in eine gewünschte Verabreichungsform z.B. Pellets oder Pulver überführt. Das Futtermittel wird mit Hilfe von üblichen Verfahren in der Form von Pulver oder Pellets mit unterschiedlichem Feuchtegehalt und Zusammensetzung erstellt und verfüttert. Das Anmischen von Tonmineral und Futtermittel erfolgt bevorzugter Weise unter feuchten Bedingungen, wobei eine Paste gebildet wird, die ebenfalls als Verabreichungsform für aquatische Organismen geeignet ist. Die Verbindung des Tonminerals bzw. Tonmineral/Zusatzstoff-Gemisches mit weiteren Futtermitteln erfolgt über Stärke und andere Bindemittel.

Das Futtermittel kann das mindestens eine Tonmineral demnach in einer Menge von mindestens 1 Gew%, bevorzugt von mindestens 1.5 Gew%, insbesondere bevorzugt von mindestens 2 Gew% bezogen auf die Gesamtmenge des Futtermittels umfassen Erfindungsgemäß werden demnach mindestens 2 Gew% des Futtermittels und das Wechsellagerungstonmineral aus Montmorillonit und Illit/Muskovit Tonmineral ausgetauscht.

Es wird somit ein Futtermittel mit definiertem Tonmineralanteil und weiterem Futterzusatzstoff bereitgestellt. Dieses neuartige Futtermittel kann weitere notwendige Spurenelemente, mykotoxinabsorbierende Wirkung sowie ggf. zusätzliche Nahrungsbestandteile aufweisen, wie später noch detaillierter beschrieben. Durch die mykotoxinabsorbierende Wirkung erfolgen positive Effekte auf die Lagerhalterung des Futtermittels.

Die Partikelgröße des verwendeten Tonminerals kann je nach Verarbeitungs- bzw. Behandlungsstadium variieren.

Erfindungsgemäß weist das verwendete Tonmineral nach einem entsprechenden Mahlprozess eine mittlere Teilchengröße von 0,1 bis 10 µm, bevorzugt von 0,5 µm bis 5 µm, insbesondere bevorzugt von 1 bis 3 µm auf. So kann das Tonmineral eine mittlere Teilchengröße von z.B. 2 µm haben.

Es ist aber auch möglich, dass die Teilchengröße des Tonminerals noch weiter reduziert wird. So kann die mittlere Teilchengröße je nach Art des angewendeten Zerkleinerungsverfahrens des Tonminerals sich auch in einem Bereich von 0,1 bis 1,5 µm, bevorzugt von 0,3 bis 0,8 µm, insbesondere bevorzugt von 0,4 bis 0,5 µm bewegen.

Es ist weiterhin bevorzugt, wenn das Tonmineral eine spezifische innere BET-Oberfläche von 50 m²/g bis 500 m²/g, bevorzugt von 100 m²/g bis 400 m²/g, insbesondere bevorzugt von 200 m²/g bis 300 m²/g aufweist. Die BET-Oberfläche des Tonminerals ist typischerweise abhängig von der Teilchen- bzw. Partikelgröße. So weist ein Tonmineral, welches zu einer Teilchengröße zwischen 0,1 bis 1,5 µ vermahlen wurde, eine BET-Oberfläche von 200 bis 600 m²/g, bevorzugt 300 bis 500 m²/g, insbesondere bevorzugt von 400 bis 450 m²/g auf.

Die BET-Messungen erfolgen nach der DIN ISO 9277.

Das vorliegend zum Einsatz kommende Tonmineral wird erfindungsgemäß vor seiner Verwendung zerkleinert und erfindungsgemäß anschließend thermisch bei einer Temperatur zwischen 50°C und 200°C, bevorzugt 70°C und 150°C, insbesondere bevorzugt zwischen 90°C und 125°C über einen Zeitraum von 10 bis 60 min, bevorzugt 15 bis 45 min behandelt. Das zum Einsatz kommende Tonmineral kann vor Verwendung aber auch bei höheren Temperaturen calciniert werden. So kann das Tonmineral vor der Verwendung bei einer Temperatur zwischen 400°C und 800°C, bevorzugt zwischen 500°C und 700°C, insbesondere bevorzugt bei 550°C über einen Zeitraum von 60 min bis 240 min, bevorzugt 90 min bis 180 min, insbesondere bevorzugt 120 min thermisch behandelt werden.

In einer weiteren bevorzugten Ausführungsform wird das Tonmineral vor seiner Verwendung nach der thermischen Behandlung mit zweiwertigen Kationen, insbesondere Magnesium-Ionen angereichert ist. Die Anreicherung des thermisch behandelten Tonminerals mit zweiwertigen Kationen, wie z.B. Magnesium-Ionen führt zu einer nochmals verbesserten Aktivität des Tonminerals. Prinzipiell sind alle zweiwertigen Kationen vorliegend einsetzbar, wobei lediglich auf die Verträglichkeit der zweiwertigen Kationen zu achten ist. So ist es vorstellbar, anstatt oder zusätzlich zu den genannten Mg²⁺ -Ionen auch Ca²⁺ oder Fe²⁺ -Ionen zu verwenden.

Der Gehalt an zweiwertigem Kation wie Mg²⁺ im Tonmineral kann in einem Bereich zwischen 5 und 20 Ma% (bezogen auf das trockene Tonmineral), bevorzugt zwischen 5 und 15 Ma%, insbesondere bevorzugt bei 10 Ma% liegen. So weist z.B. 1 g mit Mg²⁺ adsorbiertes Tonmineral 100 mg Mg²⁺ auf.

Die Anreicherung des Tonminerals mit zweiwertigen Kationen, wie den Magnesium-Ionen wird bevorzugt unter Verwendung von einem Magnesiumsalz, insbesondere Magnesiumchlorid oder Magnesiumsulfat, mit einem Massenanteil zwischen 30 und 70%, bevorzugt 45 und 60% durchgeführt.

In einer Ausführungsform wird die zum Einsatz kommende Magnesiumionen-haltige Lösung in einem Diaphragmalyseverfahren hergestellt. Dabei wird durch eine Elektrolyse eine Magnesiumchloridlösung in ein Anolyt (Chlorwasser) und in ein Katholyt (Magnesiumwasser) aufgespalten. Ein Diaphragma trennt beide Wässer voneinander. Das Anolyt ist sehr sauer und oxidiert, das Katholyt sehr basisch und reduziert. Die Magnesiumlösung hat bevorzugt einen pH-Wert zwischen 7-10, insbesondere bei ca. 9.

In einer weiteren bevorzugten Ausführungsform weist das thermisch behandelte und mit Magnesium-Ionen angereicherte Tonmineral eine mittleren Teilchengröße von 0,1 bis 1 µm, bevorzugt von 0,3 bis 0,8 µm, insbesondere bevorzugt von 0,5 µm auf. Die Vermahlung des Tonminerals kann z.B. einer Rührwerkskugelmühle vorgenommen werden.

Mineralien kann man generell in 10 unterschiedliche Klassen einteilen, wobei jede Klasse für sich wieder in mehreren verschiedenen Unterklassen aufgeteilt werden kann. Viele Mineralien haben ihre bevorzugten Einsatzgebiete. Für adsorptive Prozesse kommen insbesondere aus der Silikatgruppe das Gerüstsilikat Zeolith und das Schichtsilikat Montmorillonit zum Einsatz. Zur besseren Vergleichbarkeit der verschiedenen Montmorillonitqualitäten wurde der Begriff Bentonit geprägt, dessen mineralogische Zusammensetzung mindestens 60 bis 70% Montmorillonit enthalten muss. Für viele technische Anwendungen ist diese Gruppenbildung sehr hilfreich. Die Wirkung von Mineralen in biologischen Systemen geht aber weit über Adsorptionsprozessen hinaus. Deshalb ist die alleinige Fixierung auf nur einen möglichst hohen Montmorillonitanteil in der mineralischen Verbindung nicht zielführend.

Die häufig in der Natur vorkommenden mineralischen Verbindungen bzw. Matrizen, mit Wechsellagerungstonminerale (Mixedlayer) als Hauptbestandteil, werden auf Grund ihrer im Vergleich zu reinen Montmorillonitschichten geringeren messbaren spezifischen Oberflächen, Quellvermögen und Kationenaustauschkapazitäten seltener für adsorptive und katalytische Applikationen verwandt.

Es hat sich nunmehr herausgestellt, dass natürlich vorkommende mineralische Verbindungen bzw. Matrizen mariner Genese aus Mixedlayer oder Wechsellagerungsmineralien bestehen, die sich aus quellfähigen und nichtquellfähigen Schichten in unregelmäßiger Folge zusammensetzen und die ggf. noch anderen Minerale wie Silikate, Oxide, Carbonate, Sulfide und Sulfate enthalten, nach einer entsprechenden Aufbereitung durchaus adsorptive und andere interessante Eigenschaften aufweisen.

Mixedlayer können strukturell aus sehr unterschiedlichen Wechsellagerungsschichten bestehen z.B. Kaolinit/Smectit, Chlorit/Vermikulit, Glimmer/Vermikulit oder sehr häufig Wechsellagerung von Illit/Smectit oder Illit/Montmorillonit. Dadurch sind vielfältigere Austauschreaktionen von Kationen und Anionen möglich als bei reinen Montmorilloniten. Deshalb sind Mixedlayer in einer Kombination mit anderen reaktiven Mineralen besonders gut geeignet für die Bindung von in Lösung befindlichen Stoffen in biologischen Systemen.

Erfindungsgemäß wird ein Tonmineral verwendet, das mindestens ein Wechsellagerungstonmineral umfasst.

Erfindungsgemäß kommt dabei ein Wechsellagerungstonmineral aus Montmorillonit und Illit/Muskovit zum Einsatz, wobei in diesem Wechsellagerungsmineral Montmorillonit und Illit/Muskovit in einem Verhältnis von 60:40 bis 40:60 enthalten sein können, wobei ein Verhältnis von 50:50 bevorzugt ist.

Zusätzlich zu den Mineralien Montmorillonit und Illit/Muskovit kann das bevorzugt verwendete Tonmineral auch Anteile von anderen Tonmineralien, wie Kaolinite und Chlorite, Carbonate, Sulfide, Oxide und Sulfate aufweisen.

In einer bevorzugten Ausführungsform weist das Tonmineral ein Fe²⁺ / Fe³⁺ - Verhältnis zwischen 0,3 und 1,0, bevorzugt 0,45 und 1,0 auf. So ist in der vorliegenden mineralischen Verbindung das Fe²⁺ / Fe³⁺ - Verhältnis um das ca. 10fache höher als in anderen bekannten Tonmineralien und weist aufgrund dieses erhöhten Fe²⁺ / Fe³⁺ - Verhältnisses ein hohes natürliches antioxidatives Potential auf.

In einer besonders bevorzugten Ausführungsform umfasst das vorliegende Tonmineral durchschnittlich 50-60 Gew%, bevorzugt 55 Gew% Montmorillonit-Muskovit-Wechsellagerung, 15-25 Gew%, bevorzugt 20 Gew % Illit, 5-9 Gew%, bevorzugt 5 Gew% Kaolinit/Chlorit, 10-20 Gew%, bevorzugt 15 Gew% Quarz, 1-2 Gew%, bevorzugt 1 Gew% Calcit, 0,9-1,5, bevorzugt 1 Gew% Dolomit, 0,9-1,9 Gew%, bevorzugt 1 Gew% Feldspat, 0,9 - 1,0 Gew%, bevorzugt 1 Gew% Pyrit und 0,6-1,0 Gew%, bevorzugt 1 Gew% Gips.

Die chemische Zusammensetzung der Hauptelemente kann in Gew% wie folgt angegeben werden: SiO₂ 57,9-59,5; Al₂O₃ 17,0-18,5; Fe₂O₃ 5,9-7,0; K₂O 2,8-3,5; MgO 1,5-2,6; Na₂O 0,9-1,5; TiO₂ 0,6-1,5; CaO 0,25-0,35; P₂O₅ 0,09-0,15; Sonstige 8,9-10,5.

Ein Teil der im unbehandelten Ausgangstonmineral enthaltenen Minerale geht bei Vorhandensein eines Lösungsmittels in dieses über. So ergab ein Suspensionsversuch mit 2 Gew% mineralischer Verbindung in destilliertem Wasser, wobei die Suspension mittels Ultrazentrifuge getrennt und dann der Überstand analysiert wurde, folgende Ergebnisse: Leitfähigkeit 346 µS; pH-Wert 7,3; Kalium 5 mg/l; Natrium 73 mg/l; Chlor 20 mg/l; Magnesium 0 mg/l; Kalzium 1 mg/l; SO₄ 121 mg/l; Aluminium 0 mg/l; SiO₂ 8 mg/l; Eisen 0 mg/l.

Besonders hervorzuheben ist der hohe Anteil an Sulfaten und die Tatsache, dass keine Aluminium-Ionen in Lösung gehen. Dies ist besonders für die Anwendung bei aquatischen Organismen von besonderer Bedeutung.

Eine weitere Besonderheit des unbehandelten Ausgangstonminerals ist der hohe Anteil an organischem Kohlenstoff von 0,4 Gew%. Zusammen mit den vorhandenen Sulfaten und Sulfiden ist dies ein wichtiger Beweis für die marine Genese der mineralischen Verbindung und gleichzeitig ein wesentlicher Beitrag zur Wirksamkeit derselben. So weist die mineralische Verbindung bevorzugt mindestens ein Eisensulfid, insbesondere amorphes Pyrit FeS₂ auf, wobei das Eisensulfid in einem Massenanteil zwischen 0,5 % bis 5 %, bevorzugt 0,9 % bis 3,0 % in der mineralischen Verbindung vorhanden sein kann.

Das bevorzugt verwendete Tonmineral wird aus den in Deutschland in Mecklenburg-Vorpommern, genauer in der Nähe von Friedland im östlichen Teil der Mecklenburgischen Seenplatte, vorhandenen Tonvorkommen isoliert und aufbereitet.

Das bevorzugt verwendete Tonmineral weist, wie bereits oben erwähnt, einzigartige Eigenschaften auf, in denen es sich von anderen mineralischen Matrizen wie Bentonit oder Montmorillonit wesentlich unterscheidet.

So ist das vorliegend verwendete Tonmineral nicht nur in der Lage, Kationen in den vorhandenen Montmorillonitschichten auszutauschen, sondern auch Anionen zu binden. Der Wirkmechanismus der vorliegend zum Einsatz kommenden mineralischen Verbindung ist daher ein anderer als bei Bentoniten. So werden z.B. anionische Stoffe besonders gut an den Bruchkanten der in der verwendeten mineralischen Verbindung enthaltenen Illite/Muskovite locker gebunden. Ursache dafür sind fehlende bzw. herausgeschlagene Kaliumionen, die im Mineralverbund für einen Ladungsausgleich sorgen. So entstehen positive Ladungen, an denen Anionen locker gebunden werden können. Da bioaktive Anionen eine relativ hohe Molekularmasse und damit Durchmesser aufweisen, sind die an den Bruchkanten entstandenen Vertiefungen nicht groß genug, um eine feste Bindung zu realisieren. Dies gelingt nur mit kleineren Molekülen, wie die sehr hohe Adsorptionskraft für insbesondere sauerstoffhaltige Molekülanionen wie Phosphat PO₄³⁻, Nitrat NO₃⁻, Nitrit NO₂⁻ und andere beweist. Hier spielen auch die Fe²⁺ -Ionen an den Bruchkanten und hydrierte Eisenoxide (FeO(OH)) aus der Pyritoxidation eine entscheidende Rolle, da diese als Gegenionen fungieren können.

Um eine möglichst hohe Bindungskapazität der vorliegenden mineralischen Verbindung zu erreichen, ist eine Feinstzerkleinerung zur Schaffung einer möglichst hohen Anzahl von Bruchkanten vorteilhaft.

Das vorliegend verwendete Tonmineral wird bevorzugt in einem Verfahren mit den folgenden Schritten gewonnen:
a) Zerkleinerung des unbehandelten Tonminerals auf eine mittlere Teilchengröße zwischen 0,1 und 10 µm, bevorzugt 0,5 und 5 µm, insbesondere bevorzugt 1 und 3 µm und Trocknen auf eine Endfeuchte zwischen 0,05 und 1 Ma%, bevorzugt 0,1 und 0,5 Ma%, insbesondere bevorzugt 0,1 Ma und 0,2 Ma%; und
b) thermische Behandlung des zerkleinerten Tonminerals bei einer Temperatur zwischen 50°C und 200°C, bevorzugt 70°C und 150°C, insbesondere bevorzugt zwischen 90°C und 125°C über einen Zeitraum von 10 bis 60 min, bevorzugt 15 bis 45 min.

Wie oben bereits beschrieben, kann die thermische Behandlung aber auch bei einer höheren Temperatur, wie zwischen 400°C und 800°C, bevorzugt zwischen 500°C und 700°C, insbesondere bevorzugt bei 550°C über einen Zeitraum von 60 min bis 240 min, bevorzugt 90 min bis 180 min, insbesondere bevorzugt 120 min, vorgenommen werden.

Das Ausgangstonmineral wird aus Rohton in Form von Tonpellets mit einer Größe von 10 bis 50 mm, bevorzugt 15 bis 30 mm und einer Feuchte von 10 bis 50 Ma%, bevorzugt 15 bis 30 Ma% gewonnen. Die mittlere Teilchengröße der Tonteilchen in den Tonpellets beträgt 5 bis 15 µm, bevorzugt 7 bis 12 µm, insbesondere 9µm.

Das anfängliche Zerkleinern des Ausgangstonminerals gemäß Schritt a) erfolgt z.B. in einer dreistufigen Prallmühlen-Sichter-Kombination zur gleichzeitigen Zerkleinerung und schonenden Trocknung des Ausgangstonminerals auf die oben genannte Teilchengröße und Endfeuchte. In diesem Verfahrensschritt erfolgt eine Anreicherung der Tonmineralien durch Abtrennung von funktionslosen Mineralien um bis zu 50% und eine Erhöhung des Wasseraufnahmevermögens um bis zu 90%.

In der sich in Schritt b) anschließenden thermischen Behandlung des zerkleinerten Ausgangstonminerals findet eine Thermoaktivierung des Tonminerals bei gleichzeitiger vollständiger Dehydration und Beseitigung von organischen Stoffen aus dem Tonmineral statt.

In einem anschließenden Verfahrensschritt c) kann das thermisch behandelte Tonmineral in einer zweiwertige Kationen-, insbesondere Magnesiumionen- enthaltenden Lösung unter Ausbildung einer kolloidalen Lösung dispergiert werden. Der pH-Wert der verwendeten Magnesiumionen-Lösung beträgt 7-10, bevorzugt 9. Die Konzentration der Lösung an zweiwertigen Kationen, wie Mg²⁺-Ionen beträgt bevorzugt 5 bis 10 Ma%, insbesondere 7 Ma%. Der Anteil an zweiwertigen Kationen wie Mg²⁺ im behandelten Tonmineral beträgt dann bevorzugt 10 Ma% bezogen auf die Tonmineraltrockenmasse, wie oben bereits ausgeführt. Die Menge des Tonminerals, das in der Magnesiumionen-enthaltenden Lösung dispergiert wird, kann bei 10 bis 50 Ma%, bevorzugt 10 bis 30 Ma%, insbesondere bevorzugt bei 15 bis 20 Ma% liegen.

In einem weiteren Schritt d) kann die kolloidale Mg-Tonmineral-Lösung bevorzugt auf eine mittlere Teilchengröße von 0,1 bis 1,5 µm, bevorzugt von 0,3 bis 0,8 µm, insbesondere bevorzugt von 0,4 bis 0,5 µm vermahlen werden. Das Vermahlen des kolloidalen Tonminerals kann z.B. unter Verwendung einer Rührwerkskugelmühle erfolgen. Während der Vermahlung kommt es zu einer weitergehenden Einarbeitung der Magnesium-Ionen in die mineralische Matrix.

Im Anschluss an die Kolloidvermahlung des thermisch behandelten und mit zweiwertigen Kationen, insbesondere Magnesium-Ionen angereicherten Tonminerals kann die kolloidale Tondispersion mittels vorhandener Trocknungsverfahren, insbesondere durch ein VakuumKontakt-Trocknungsverfahren z.B. auf eine Restfeuchte von 1 bis 10 Ma%, bevorzugt 3 bis 8 Ma%, insbesondere bevorzugt 4 bis 5Ma% getrocknet werden.

Wie bereits oben angedeutet, kann das Tonmineral mit mindestens einer weiteren anorganischen und/oder organischen Substanz modifiziert werden.

Mögliche anorganische Substanzen sind z.B. ausgewählt aus der Gruppe der Metallsalze, insbesondere der Calcium-, Natrium- und Magnesiumsalze, wie Calciumchlorid, Natriumchlorid oder Magnesiumchlorid. Aber auch die entsprechenden Nitrate oder Sulfate können verwendet werden.

Mögliche organische Substanzen, die zur Modifizierung des Tonminerals verwendet werden können, sind bevorzugterweise ausgewählt aus einer Gruppe enthaltend Mikroorganismen wie Bakterien, Pilze, oder Algen.

Beispiele für Mikroorganismen sind Bakterien z. B. Milchsäurebakterien, Pilze z. B. Backhefe S. *cerevisiae,* Cyanobakterien (Blaualgen), oder mikroskopische Algen z. B. Chlorellen, die u. a. als Nahrungsergänzungsmittel verwendet werden.

In einer bevorzugten Ausführungsform ist die mindestens eine weitere Substanz ausgewählt aus der Gruppe der Mikroalgen. Von besonderer Bedeutung für die vorliegende Verwendung sind dabei Mikroalgen, die für die menschliche und tierische Ernährung und Gesunderhaltung geeignet sind.

Zur Klasse der vorliegend bevorzugt verwendeten mikroskopischen Algen bzw. Mikroalgen zählt die umfangreiche Gattung *Chlorella,* mit seinen Arten *Chlorella vulgaris, Chlorella angustoellipsoidea, Chlorella botryoides, Chlorella capsulata, Chlorella ellipsoidea, Chlorella emersonii, Chlorella fusca, Chlorella homosphaera, Chlorella luteo-viridis, Chlorella marina, Chlorella miniata, Chlorella minutissima, Chlorella mirabilis, Chlorella ovalis, Chlorella parasitica, Chlorella peruviana, Chlorella rugosa, Chlorella saccharophila, Chlorella salina, Chlorella spaerckii, Chlorella sphaerica, Chlorella stigmatophora, Chlorella subsphaerica, Chlorella trebouxioides.*

Weitere bevorzugte Mikroalgen gehören zu der Gattung *Pediastrum* wie z.B. *Pediastrum dupl, Pediastrum boryanum* und der Gattung *Botryococcus* wie z.B. *Botryococcus braunii* an.

Selbstverständlich ist es auch möglich, das Tonmineral mit anderen als den erwähnten Substanzen zu modifizieren. Denkbar wären z.B. pharmazeutische Wirkstoffe wie Antibiotika oder Antifungizide. Das gilt insbesondere für die Bindung von Immunostimulanzien bzw. Antigene oder deren Hüllen (z.B. sodium alginate) für die orale Applikation, welche bereits vielfach in der Aquakultur Verwendung finden, an das Tonmineral.

Die vorliegende Erfindung wird anhand der folgenden Ausführungsbeispiele unter Bezugnahme auf die Figuren näher erläutert. Es zeigen:
- Fig. 1: ein schematischer Aufbau eines Versuchskreislaufes zur Fütterung eines aquatischen Organismus mit einem Tonmineral;
- Fig. 2: ein erstes Diagramm zur Überlebensrate des aquatischen Organismus nach Verabreichung des Tonminerals ;
- Fig. 3: ein zweites Diagramm zum Zuwachs des aquatischen Organismus nach Verabreichung des Tonminerals;
- Fig. 4: ein drittes Diagramm zur Biomasseentwicklung des aquatischen Organismus nach Verabreichung des Tonminerals;
- Fig. 5: ein viertes Diagramm, das den Fütterungsquotienten anzeigt, und
- Fig. 6: ein fünftes Diagramm, das das Individualwachstum des aquatischen Organismus anzeigt;
- Fig. 7: ein Vergleich von fünf Messungen der kristallographischen Eigenschaften;
- Fig. 8: Gewichtszunahme [g] von *L*. *vannamei* während der Versuche I-III;
- Fig. 9: Überleben [%] von *L*. *vannamei* während der Versuche I-III;
- Fig. 10:: Histogramm Größenverteilung des Endgewichts der Shrimps [g] und unterschiedliche Ton-Behandlungsgruppen in Versuch I;
- Fig. 11:: Histogramm Größenverteilung des Endgewichts der Shrimps [g] und unterschiedliche Ton-Behandlungsgruppen in Versuch II.
- Fig. 12:: Histogramm Größenverteilung des Endgewichts der Shrimps [g] und unterschiedliche Ton-Behandlungsgruppen in Versuch III;
- Fig. 13: Darstellung einer IR-Spektroskopie.Analyse von Friedland Ton.

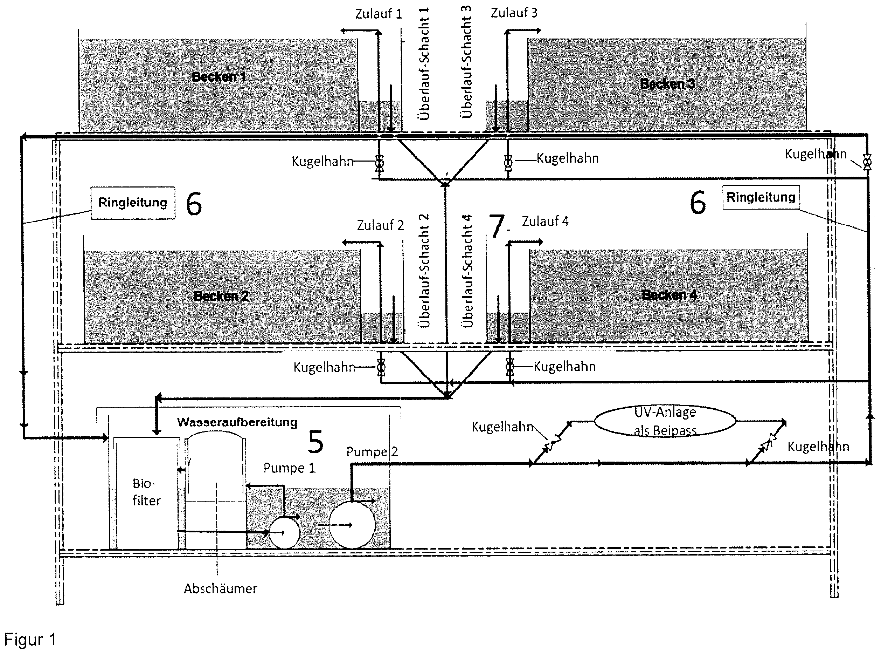

In Fig. 1 ist ein vorliegend verwendeter Versuchskreislauf zur Anfütterung und Hälterung von Garnelen der Art *Lithopenaeus vannemai* gezeigt. Die verwendete Aquarien-Versuchsanlage umfasst 4 identischen Kreisläufen und jeweils 4 identischen Becken 1-4 (165 l) je Kreislauf (750 l), einen Pumpensumpf mit Wasseraufbereitung 5, eine Ringleitung 6 und einen Zulauf 7.

Der Betrieb der Rezirkulationssysteme erfolgt unter kontinuierlicher Kontrolle der Wasserparameter Temperatur [°C], Sauerstoffgehalt [mg l⁻¹], Salinität [ppt], Gesamt-Stickstoff (NH₃-N [mg l⁻¹]), Nitrit [mg l⁻¹], Nitrat [mg l⁻¹] und Orthophosphat [mg l⁻¹] in einem für diese Tierart geeignetem Bereich.

Die Kreisläufe sind ausgestattet mit einer einfachen Reinigung (Schaumstoffmatten), einem Eiweißabschäumer und einem Biofilter (Rieselfilter). Die Beheizung der Becken erfolgte über Heizstäbe (1 x pro Becken).

Die Belüftung der Aquarien mit atmosphärischer Luft erfolgt über einen Kompressor. Jeder Kreislauf wird mit zwei Magnetkreiselpumpen (Pumpe 1 = Saugpumpe, Pumpe 2 = Umwälzpumpe) betrieben (Förderung Wasservolumen von 250 % h⁻¹).

Im Rahmen der Versuchsdurchführung beträgt die Besatzdichte in den Versuchsbecken 100-150 Postlarven auf 160 l Wasservolumen in den 16 Versuchsbecken. Die Hälterung der Garnelen dauert beginnend vom Postlarvenstadium bis zu 50 Tagen bei einem Salzgehalt von 13,97 (± 0,29) PSU und einer Temperatur von 30,67 (± 0,23) °C.

Die Fütterung der Garnelen wird mit folgenden Futtermitteln vorgenommen: a) kommerzielles Garnelenfutter, b) kommerzielles Garnelenfutter (nicht-erfindungsgemäß) mit 1 Gew% Montmorillonit (Friedländer Ton); c) kommerzielles Garnelenfutter(nicht-erfindungsgemäß) mit 1 Gew% Montmorillonit (Friedländer Ton) modifiziert mit Algen (*Chlorella vulgaris*); d) kommerzielles Garnelenfutter mit 2 Gew% Montmorillonit (Friedländer Ton); und e) kommerzielles Garnelenfutter mit 2 Gew% Montmorillonit (Friedländer Ton) modifiziert mit Algen (*Chlorella vulgaris*);

Im Rahmen der Versuchsdurchführung erfolgte eine Anpassung der Fütterung zu 3 Zeitpunkten je nach geschätzter Überlebensrate.

Die Auswertung der Versuche ergab, dass die Verabreichung des Tonminerals Montmorillonit zu einer Steigerung der Überlebensrate der untersuchten Garnelen führt.

In Tabelle 1 sind die Wachstumsparameter von *L*. *vannemai* bei Verabreichung des Tonminerals gezeigt. So steigt die Überlebensrate bei der Fütterung mit kommerziellem Garnelenfutter und 2% Montmorillonit (Friedländer Ton) sowie 1 % Montmorillonit/1% Algengemisch (*Chlorella vulgaris*) (nicht-erfindungsgemäß) und 2% Montmorillonit auf jeweils 117,7 % (Experiment I), sowie mit Garnelenfutter und 2% Montmorillonit/Algengemisch auf 200 % (Experiment II).

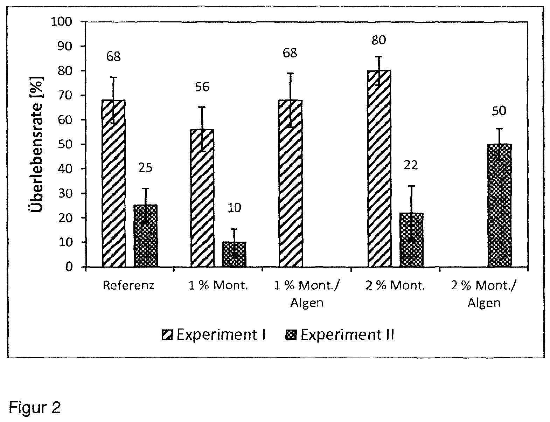

Die Versuchsdaten der Tabelle 1 sind zwecks besserer Anschaulichkeit in den Diagrammen der Figuren 2 bis 6 zusammengefasst.

Friedländer Ton ist ein spezielles Tonmineral eozäner, mariner Genese, nämlich ein natürliches Gemisch aus Montmorillonit/Ilit, gefördert aus der Lagerstätte Friedland, Mecklenburg-Vorpommern, Deutschland.

Es ist bekannt, dass unterschiedliche Tone sehr unterschiedliche Eigenschaften haben; es kommt sehr auf die Fundstelle und / oder Genese des Tons an. Im Folgenden wird die Zusammensetzung des Friedländer Tons noch genauer beschrieben.

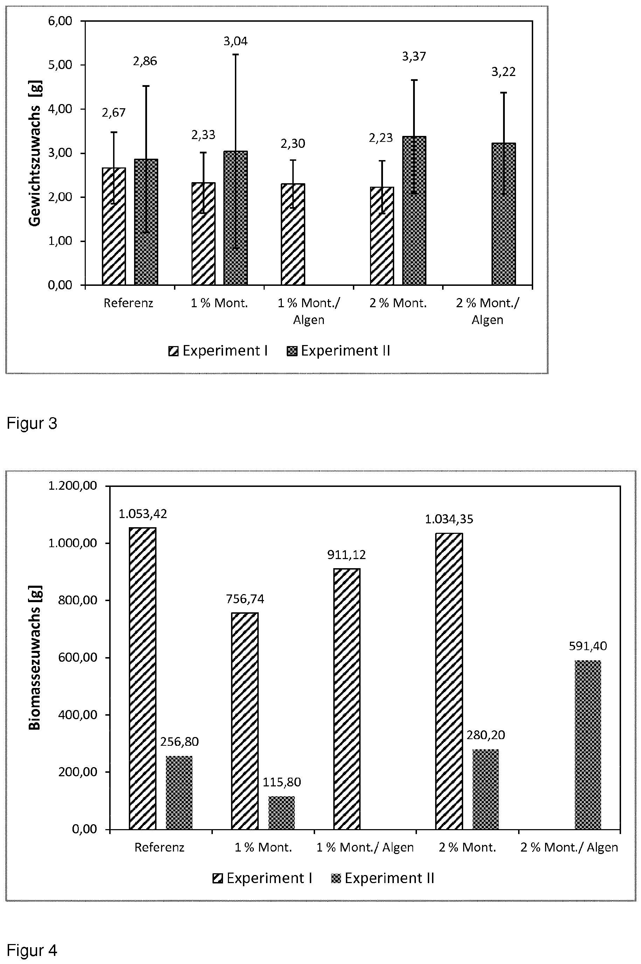

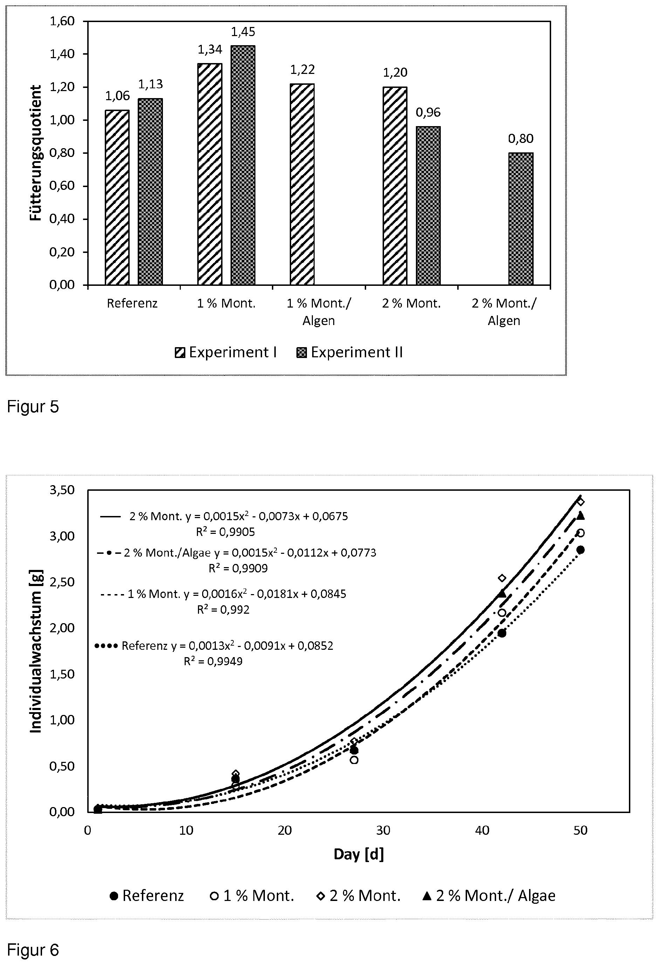

So zeigt das Diagramm der Figur 2 die Biomassenentwicklung [g] von *L*. *vannemai,* das Diagramm der Figur 3 den Fütterungsquotienten von *L*. *vannemai,* das Diagramm der Figur 4 die Überlebensrate von *L*. *vannemai,* das Diagramm der Figur 5 den Zuwachs von *L*. *vannemai,* und das Diagramm der Figur 6 zeigt das Individualwachstum von *L*. *vannemai* über einen Zeitraum von 50 Tagen.

Die Daten zeigen eindeutig, dass die Verabreichung des Tonminerals des hier beschriebenen Montmorillonit / Illit Wechsellagerungsmineral (Friedländer Ton) zusammen mit dem Futtermittel einen positiven Einfluss auf das Wachstum und die allgemeine gesundheitliche Entwicklung von *L*. *vannemai* bewirkt. Zudem war gleichzeitig das Auseinanderwachsen bei den mit dem Tonmineral behandelten Versuchsgruppen geringer. Die gleichzeitige Reduzierung der Mortalität (Steigerung der Überlebensrate) und die Verringerung des Auseinanderwachsens ist ein Merkmal der Verabreichung des Tonminerals Montmorillonit / Illit (Friedländer Ton).

Im Experiment I wurden die Postlarven nach kurzer Zwischenhälterung in einem separaten Kreislauf mit einer sehr hohen Besatzdichte von 150 Individuen je Becken gehalten, die Überlebensrate entsprach derjenigen aus anderen Experimenten mit *L. vannemai.* Im Experiment II war die Besatzdichte mit 100 Postlarven je Becken geringer, und die Tiere wurden 2 Wochen zwischengehältert, um die Tiere zu adaptieren. Dabei war direkt vor Versuchsbeginn der Ammoniumgehalt im Wasser kurzzeitig in einem für diese Tiere ungünstigen Bereich (Ammonium-Schock). Somit verringerten sich insgesamt die Überlebensraten der Tiere im Versuch, die Steigerung der Wirkung des Minerals auf die vorbelasteten Tiere war jedoch deutlich erhöht.

### Friedländer Ton

Friedländer Ton, der in den obigen Versuchen eingesetzt wurde, ist ein natürliches Adsorbens, das mineralogisch als Montmorillionite-Illit Ton bezeichnet wird. Es ist ein feinkörniges Produkt aus einem natürlich vorkommenden Rohstoff, einem Wechsellagerungsmineral tertiärer mariner Genese (mit einem Dioxingehalt weit unterhalb des Grenzwertes 0,2 ng) aus dem Eozän. Aufgrund der enthaltenen Montmorillonitschichten weist das Produkt ein hohes Quell- und Wasserbindungsvermögen auf. In der Entstehung handelt es sich um sedimentierte Vulkanasche, mariner eozäner Genese (ca. 65 Millionen Jahre Mineralisierungszeit). Es handelt sich um ein hydratisiertes Natrium Calcium Aluminium Silicat.(HSCAS).

### Physikalische Eigenschaften:

Aussehen: feines, homogenes, trockenes Pulver
Farbe: hellgrau
Dichte: kleiner 0,8 t / m^3
Mittlere Partikelgröße: 99% <= 100µm, 90% <= 50µm (Trockensiebung)

### Chemische Eigenschaften:

pH-Wert: 8,3 (bei einer Konzentration von 2%)
Geruch: geruchslos
Löslichkeit: unlöslich in Wasser und Öl. Ausbildung einer stabilen Suspension in Wasser und Öl.
Feuchtigkeit: < 6% Wasser, hygroskopisch.

### Zusammensetzung

Mineralogie:
>= 70 Tonmineralien
>= 44% Montmorillonit/Illit Gemischtlagenmineral (50/50)

Andere minerale Bestandteile: Illite / Muscovit; Kaolinit/Chlorit.

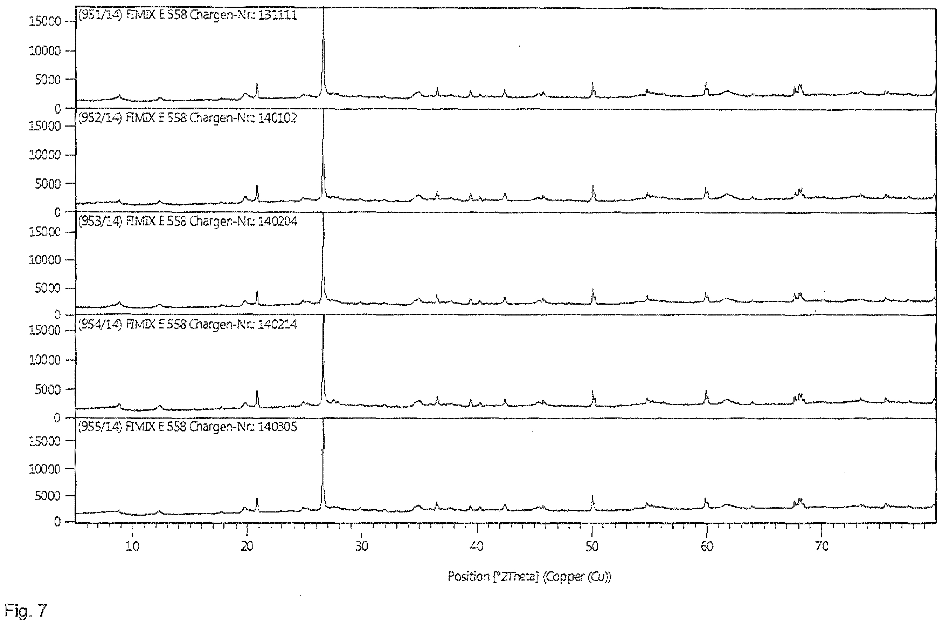

In Fig. 7 sind fünf Proben Friedländer Tons (über mehrere Jahre hinweg gezogen) mit einer Röntgenstrukturanalyse unterzogen worden, um die kristallographischen Eigenschaften zu bestimmen. Es wird deutlich, dass der Friedländer Ton sehr homogen ist.

In Tabelle 2 ist eine Elementaranalyse der fünf Proben dargestellt, die ebenfalls deutlich macht, dass die Zusammensetzung des Friedländer Tons sehr homogen ist.

In Tabelle 3 ist das Ergebnis einer Korngrößenanalyse für drei Proben Friedländer Tons dargestellt. Die Messungen wurden mit einer Laserbeugungsmethode durchgeführt.

Im Folgenden werden Ergebnisse von Versuchen, die Ausführungsformen der Verwendung entsprechen detailliert dargestellt.

### Montmorillonit-Tonminerale mit oder ohne Mikroalgen als Futterzusatz bei Whiteleg-Shrimp-Larven (Litopenaeus vannamei)

**Zusammenfassung:** Whiteleg-Shrimp-Postlarven, *Litopenaeus vannamei,* wurde 12 Tage nach dem Schlüpfen (PL 12) Montmorillonit-Tonminerale mit oder ohne Zusatz von *Chlorella vulgaris* Mikroalgenpulver als Futterzusatz gegeben. Die Versuche wurden in vier identischen Kreislaufsystemen durchgeführt, von denen jedes aus 4 Aquarien mit einem Wasservolumen von 750 Litern und einem Durchfluss von 250 % pro Stunde bestand. Bei einer Besatzdichte von 150 Postlarven pro 0,5 m² pro Aquarium, also einer Super-Intensiv-Haltung, zeigte die Anwendung von 2 % Tonmineralen von Friedland eine positive Wirkung auf das Überleben von *L*. *vannamei* sowie die Gesamtendgewichtszunahme und reduzierte teilweise die Futterverwertung (FCR) bei drei unabhängigen Versuchen. Dagegen reduzierte die Anwendung von 1 % Tonmineral (nicht-erfindungsgemäß) die Wachstumsentwicklung der Shrimps im Vergleich zur Kontrollgruppe. Bei den Behandlungsgruppen, die 2 % Ton oder 2 % Ton/2 % Algen erhielten, nahm die Größenverteilung der Shrimps ab, was zu einem niedrigeren Höchstgewichtsunterschied und einer niedrigeren Standardabweichung im Vergleich zu der 1 % Ton-Behandlungsgruppe (nicht-erfindungsgemäß) und der Kontrollgruppe führte. In Anbetracht der höheren Überlebensraten und der Beobachtung, dass schwache Garnelen unmittelbar von den anderen Tieren in den Aquarien gefressen wurden, hat der Tonmineral-Futterzusatz möglicherweise Kannibalismus unterdrückt und eine gleichmäßigere Größenverteilung und einen gesünderen Bestand bewirkt. Die verwendeten Mikroalgen *Chlorella vulgaris* stammten aus einem Bioreaktor, der an ein mit CO₂ betriebenes Kraftwerk angeschlossen war, sodass der direkte Einsatz von Mikroalgenprodukten in Kombination mit Montmorillonit-Tonmineralen als Futterzusatz für Futter für eine gesunde Aquakultur ermöglichte.

### Einleitung:

Brackwassergarnelen, die zur Familie der *Penaeidae* gehören, sind ein hochwertiges Lebensmittel. Obwohl Garnelen mengenmäßig nur 6,5 % der weltweiten Gesamtproduktion in der Aquakultur ausmachten, stellten sie 14 % des Wertes von Aquakulturprodukten im Jahr 2012 dar. Steigende Nachfrage, begrenztes Produktionsvolumen und steigende Shrimp-Preis sind für diesen Trend verantwortlich [1]. Eines der Haupthindernisse bei der Shrimpzucht sind Krankheiten, die regelmäßig zu höheren Mortalitätsraten und Produktionsverlusten führen.

Maßnahmen zur Krankheitsbekämpfung, Stabilisierung des Immunsystems und die Verbesserung des Gesundheitszustands der Shrimps waren bereits Gegenstand vorangegangener Untersuchungen [2, 3, 4, 5, 6].

Der herabgesetzte Einsatz von Antibiotika und anderen bei der Shrimpzucht verwendeten Chemikalien ist wichtig für eine ökologisch nachhaltige Entwicklung der Aquakultur weltweit [4, 7, 8, 9, 10, 11]. Unterschiedliche Futterzusätze, bioaktive Komponenten und Probiotika haben sich Berichten zufolge gesundheits- und wachstumsfördernd auf die Shrimps ausgewirkt [12, 13, 14, 15] und wurden als eine Alternative zum Einsatz von Antibiotika diskutiert [3]. Futterzusätze wie Vitamine, Mineralstoffe oder Pflanzeninhaltsstoffe sind bekannt für ihre positive Wirkung, und ihre Verwendung in der Shrimp-Aquakultur ist weit verbreitet [15, 16, 17]. Besonders von Algen und ihren Inhaltsstoffen als Futterbestandteile wurde vermutet, dass sie förderlich für die Shrimpzucht sind [18, 19, 20, 21, 22, 23].

Bei Tonmineralen wurde die positive Wirkung auf die Tiergesundheit und sogar die Gesundheit des Menschen nachgewiesen [24, 25, 26, 27]. Als Zusatz zu Tierfutter binden und eliminieren sie Mykotoxine [28], fördern die Gewichtszunahme, die Futtereffizienz und die Legeleistung bei der Geflügelzucht [29, 30, 31] und sie steigern die durchschnittliche tägliche Gewichtszunahme und Wachstumsentwicklung bei der Schweine- [32, 33, 34, 35] und Schafzucht [36]. Frühere Studien legen nahe, dass sich die Verwendung von Tonmineralen günstig auf die Zucht von Wasserorganismen auswirken könnte [37, 38]. Ton wurde dazu verwendet, die Wassertrübung zu erhöhen und die Bakterienlast im Zuchtwasser von Dorschlarven zu reduzieren, mit indirekten positiven Auswirkungen auf das Wachstum und das Überleben [39]. Direkte positive Auswirkungen verschiedener Tonminerale als Futterzusätze auf das Wachstum und die Futterverwertung wurden bei der Aquakultur zur Erzeugung von Lachsfischen nachgewiesen [40].

Über Tonminerale von Friedland wurde berichtet, dass sie ein hochwirksames Absorbens für Mykotoxine aus Tierfutter sind. Bei experimentellen Untersuchungen wurden 100 % Aflatoxin B1 und Fumonisin, 80 % Ochratoxin und Zearalenon sowie 60 % T2-Toxin absorbiert [41]. Von [26] wurde ein signifikanter Rückgang von entzündlichen Darmerkrankungen bei Ratten durch *in situ*-Perfusion eines Extrakts dieses Tonminerals berichtet. Tonminerale von Friedland sind hochwirksame Phosphatbinder und sollen sich positiv auf Nierenerkrankungen beim Menschen auswirken [27]. Als Futterzusatz steigerte dieses spezifische Tonmineral das Körpergewicht und die Futteraufnahme in der Schweinzucht, die Milchleistung und die Futteraufnahme bei der Rinderzucht und führte zu einer signifikanten Steigerung der Gewichtszunahme und Futteraufnahme bei der Hühnerzucht [42, 43, 44]. Bislang wurden bei der Aquakultur von Garnelen keine Tonminerale eingesetzt, obwohl diese Tiere gegenüber Mykotoxinen hochempfindlich sind [45, 46]. *L*. *vannamei* ist in seinem natürlichen Habitat von unterschiedlichen Tonmineralen umgeben, die möglicherweise eine Auswirkung auf infektiöse Krankheitserreger bei Garnelen haben. Mit der vorliegenden Studie sollen Tonminerale von Friedland (Friedland Ton) als Futterzusatz, mit und ohne Zusatz der Grünalge *Chlorella vulgaris,* bei der Garnelenzucht verwendet werden. Die möglichen Gründe für die berichteten Auswirkungen auf die Mortalität, Gesamtbiomasse, Wachstumsentwicklung und Größenverteilung der Shrimps werden diskutiert.

### Materialien und Methoden:

### Versuchsdesign

Die Versuche wurden in vier identischen Kreislaufsystemen durchgeführt mit einem Wasservolumen von jeweils 750 Litern und einem Durchfluss von 250 % pro Stunde. Jedes System bestand aus 4 Glasaquarien (100 cm x 50 cm x 50 cm) mit einem Volumen von ca. 165 Litern pro Aquarium sowie einer Filtereinheit einschließlich eines Biofilters und Proteinabschäumers. Für jeden Versuch wurden Whiteleg-Shrimp-Larven (*Litopenaeus vannamei*) als Postlarven (12 Tage nach dem Schlüpfen / PL 12) von Shrimp Improvement Systems LLC (SIS), 88081 Overseas Highway, Islamorada, FL 33036, USA, erworben. Vor dem Versuch wurden die Shrimplarven in einem speziellen 500-Liter-Akklimatisierungstank an die Versuchsbedingungen akklimatisiert und 7-10 Tage mit lebenden Artemien und Referenzfutter gefüttert.

Während der Fütterungsversuche wurden alle Systeme mit gereinigtem, auf einen Salzgehalt von 13-15 ‰ mit Salz versetztem Wasser gefüllt. Alle Tanks wurden wahllos mit jeweils 100-150 PL 12 Whiteleg-Shrimps (*Litopenaeus vannamei*) aufgefüllt. Die Wasserqualität wurde mit einem Hach-Lange Spektralphotometer DR 3900 und einem tragbaren Hach HQ40d-Photometer überwacht (Hach-Lange GmbH, Deutschland) und während der Versuchsdurchführung auf der optimalen Qualitätsstufe gehalten (Temperatur 29-31 °C, Salzgehalt 13-16 ‰, ph-Wert 7,7-8,0, aufgelöster Sauerstoff 6,7-8,0 mg L⁻¹, Gesamt-NH₃ 0,01-0,07 mg L⁻¹, Nitrit 0,01-0,11 mg L⁻¹ und Nitrat 2,0-16,6 mg L⁻¹). Die Futtermenge für jedes Aquarium wurde während Versuch I täglich anhand der Biomasse der Shrimps berechnet (5-15 % gemessen) und während einer Vorstudie sowie den Versuchen II und III unverändert beibehalten. Die Referenzfutter wurden 6-8 Mal am Tag durch Futterautomaten verabreicht.

### Versuche (Vorstudie. I-III)

Es wurde eine Vorstudie mit Besatzdichten von 50, 100, 150 und 200 PL 12 in jedem System unter Anwendung des handelsüblichen Futters Le Goussant 60 Tage lang durchgeführt und dabei die Überlebensraten und Gesamtbiomasse in vier Systemen überwacht. Bei Versuch I wurden die Aquarien in jedem der vier Systeme mit 150 Postlarven bestückt (entspricht 300 PL m⁻²). Als Kontrollstandard wurde das handelsübliche Futter aus der Vorstudie verwendet. Dasselbe Futter wurde mit dem Futterzusatz von 1 % Ton(nicht-erfindungsgemäß), 2 % Ton und einer Mischung aus 1,5 % Ton (nicht-erfindungsgemäß) und 0,5 % Algenpaste (*Chlorella vulgaris*), die ursprünglich als Verdünnung von einem Algenbioreaktor erworben wurde, versetzt. Dieser Versuch wurde 60 Tage lang durchgeführt und die Fütterung wurde entsprechend der wöchentlich berechneten Biomasse in jedem Tank angepasst. Die Futter wurden von der IGV GmbH, Getreidemittelverarbeitung, Potsdam (Deutschland) zusammengestellt. Während der Futterzubereitung wurde die neue Futtermischung erneut auf über 90 °C erhitzt. Für Versuch II wurde jedes Aquarium mit 100 Postlarven bestückt. Das Futter blieb während der ganzen 44 Tage unverändert. Vier verschiedene Futter wurden von Research Diet Services BV, Wijk bij Duurstede (in den Niederlanden) zusammengestellt, jedes in 3 unterschiedlichen Pelletgrößen (300-500 µm, 500-700 µm, 700-1400 µm). Das Referenzfutter enthielt Fischmehl (40,3 %), Shrimpmehl (10 %), Tintenfischmehl (6 %), Weizen (13,53 %), Weizenmehl (25 %), Fischöl (2 %), Vitaminvormischung (1,5 %), Lecithin (1 %), Salz (0,6 %) und Cholesterin (0,07 %). Die drei Testfutter wurden mit 1 % Tonzusatz (nicht-erfindungsgemäß), 2 % Tonzusatz und 2 % Tonpulver in Kombination mit 2 % Mikroalgenmehl (*Chlorella vulgaris*) hergestellt. Die Testfutter wurden auf ihre Futterzusammensetzung und ihren Energiegehalt analysiert (Tabelle 4).

Versuch III war eine Wiederholung von Versuch II, indem das Kontrollfutter - 2 % Tonpulver und 4 % der Mischung aus Tonzusatz (2 %)/Mikroalgen (2 %) - 32 Tage lang an 150 Postlarven einer neuen Shrimpcharge und bei konstantem Fütterungsregime getestet wurde. Ein Hauptunterschied bestand darin, dass die neue Kontrollgruppe in dem am besten funktionierenden Kreislaufsystem aus Versuch II (50:50 Tonpulver und Mikroalgenmischung) gehalten wurde und umgekehrt, sodass ein Verzerrungseffekt auf Grund der Versuchsanordnung ausgeschlossen wurde.

### Tonpulver und Mikroalgen

Das Tonmineral (Friedland Ton) wurde in Friedland in Mecklenburg-Vorpommern (Deutschland) von der Firma FIM Biotech GmbH gewonnen. Die Tonminerale von Friedland entstanden in seichtem Meeresmilieu aus Ablagerungen von vulkanischem Tuffgestein und erodierter Gesteine und unterliefen eine frühe Diagenese. Auf Grund der komplexen Entstehungsgeschichte enthalten Tonminerale von Friedland unter anderem gemischte Illit-/Smektit-Lagen sowie Kaolin [47]. Darüber hinaus unterscheidet es sich in seiner Zusammensetzung von allen anderen Tonmineralquellen [48] durch einen mineralischen Fingerabdruck nach folgender Formel

(Na_{0.58}Ca_{0.03}Mg_{0.10}Al_{2.22}Fe³⁺_{1.09}Fe²⁺_{0.18}Mg_{0.59}Si_{7.80}Al_{0.20}O₂₀(OH)₄) [49].

Diese Formel ist auch für alle anderen zuvor beschriebenen Ausführungsformen einschlägig.

Die Mikroalgen *Chlorella vulgaris* stammten aus einem Photo-Bioreaktor eines Kraftwerks der Stadt Senftenberg (Vattenfall GmbH, Deutschland). FIM Biotech GmbH hat ein kostengünstiges Verfahren entwickelt, bei dem gewonnene *Chlorella* vulgaris-Verdünnung direkt mit einem bestimmten Tonmineral von Friedland gebunden wird, was ein zusatzfertiges Mineral-/Algen-Gemisch als Futterzusatz ergibt. Die eiweißreiche Biomasse, in unserem Fall aus CO₂-haltigen Abgasen eines herkömmlichen Kraftwerks hergestellt, entstand infolge der Ablagerung von Magnesium und einem anschließenden Trocknungs- und Abbauprozess. Die Ton-Algen-Mischung eignete sich als Futterzusatz für Shrimps, zumal das Tonmineral in Europa bereits als Futterzusatz zugelassen ist [41].

### Datenerhebung und statistische Analysen

Zu Beginn eines jeden Versuchs wurde das Ausgangsgewicht der Shrimps gemessen. Während der Versuchsdurchführung wurden alle zwei Wochen Stichproben von 35 Tieren aus jedem Aquarium gemessen. Am Ende jedes Versuchs wurden alle Shrimps gewogen und gemessen. Gewichtszuwachs, spezifische Wachstumsrate (SGR, prozentuale Gewichtszunahme pro Tag), Futterverwertungsrate (FCR) und Überleben wurden für jede Gruppe von Shrimps berechnet.

Die Daten wurden mittels einfaktorieller ANOVA analysiert. Die Schwankungsbreiten wurden auf ihre Signifikanz mit dem TUKEY-HSD-Reichweitentest (p<0,05) für homogene Varianzen und dem DUNNETT-T3- Test (p<0,05) für inhomogene Varianzen evaluiert. Die Berechnungen erfolgten mit Hilfe des SPSS 20.0 Softwarepakets [42].

### Ergebnisse:

Die optimale Besatzdichte für das in dieser Studie verwendete System wurde anhand der Vorstudie ermittelt. Die besten Überlebensraten wurden bei Besatzdichten von 100 - 150 Shrimps pro Tank oder 200-300 Postlarven pro m² beobachtet.

### Versuch I

Die Ergebnisse dieser 60-tägigen Futterstudie sind in Tabelle 5 dargestellt. Während dieses Experiments stieg das durchschnittliche Anfangskörpergewicht von 0,047 g auf 2,22-2,65 g. Das beste Wachstum (Endgewicht) wurde bei der Kontrollgruppe beobachtet (2,65 g), wogegen die Gabe von 1 %(nicht-erfindungsgemäß), 2 % und des Mischfutters keinerlei signifikante Endgewichte von 2,22-2,32 g zeigten. Darüber hinaus erzielte die Kontrollgruppe bei allen anderen Wachstumsparametern die besten Ergebnisse (das Behandlungsfutter unterlag im Vergleich zu der Kontrollgruppe einer zusätzlichen Futterverarbeitung). Die Zunahme an Biomasse und Gewicht bei Versuchsende war signifikant höher als bei 1 % Tonmineralbehandlung (nicht-erfindungsgemäß) und höher als bei der Ton-/Algen-Mischung. Die Behandlung mit 2 % Montmorillonit zeigte keine signifikanten Unterschiede bei der Kontrollgruppe. Die SGR in der 2 %-Behandlungsgruppe war mit einem Wachstum von 6,43 % d⁻¹ pro Tag niedriger als in den anderen 3 Gruppen, im Vergleich zu 6,73 % d⁻¹ in der Kontrollgruppe, 6,50 % d⁻¹ in der 1 %-Behandlungsgruppe (nicht-erfindungsgemäß) und 6,47 % d⁻¹ in der Mischungsbehandlungsgruppe. Die niedrigste FCR wurde auch bei der Kontrollgruppe (1,07) beobachtet, die in den drei getesteten Gruppen bei 1,2-1,3 lag.

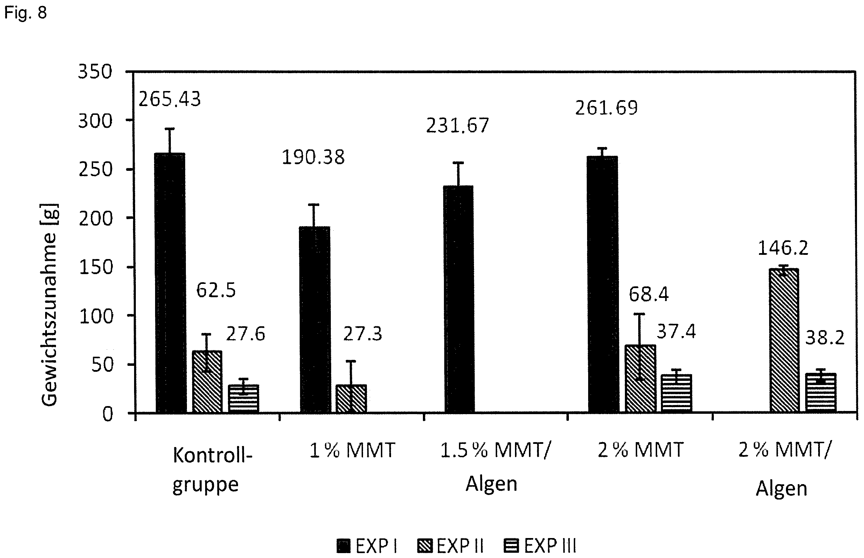

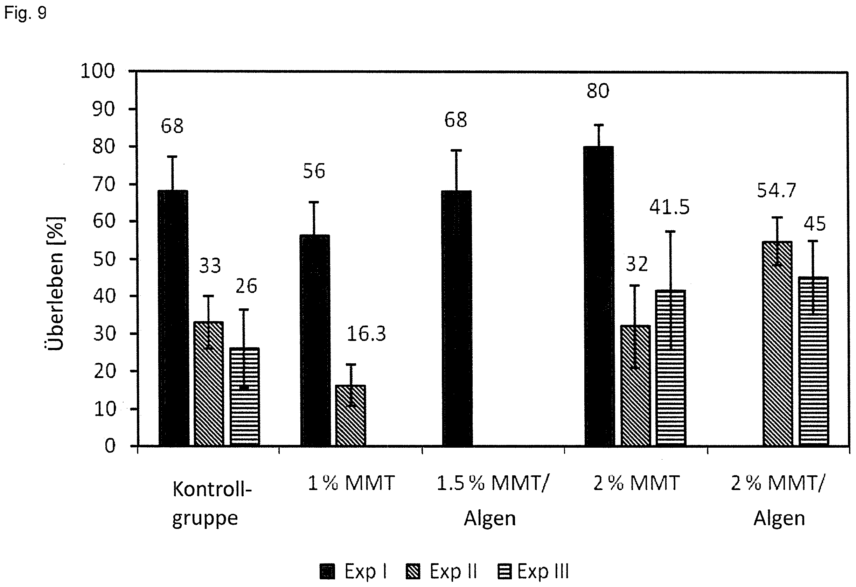

Im Gegensatz zu den jeweiligen Wachstumsparametern wurde das höchste Überleben bei der 2 %-Tonmineral-Behandlungsgruppe (79,75 %) beobachtet, obwohl es keine signifikanten Unterschiede zu der Kontrollgruppe (68,10 %) und der Ton-/Algengruppe (68,75 %, Fig. 8) gab. Die 1 %-Behandlungsgruppe (nicht-erfindungsgemäß) erzielte das niedrigste Überleben (56,25 %, Fig. 9). Die physikalischen und chemischen Wasserparameter zeigten keine signifikanten Unterschiede zwischen den Futtergruppen während dieses Versuchs mit Ausnahme des Salzgehalts mit signifikant geringen Unterschieden zwischen allen Gruppen (Tabelle 6).

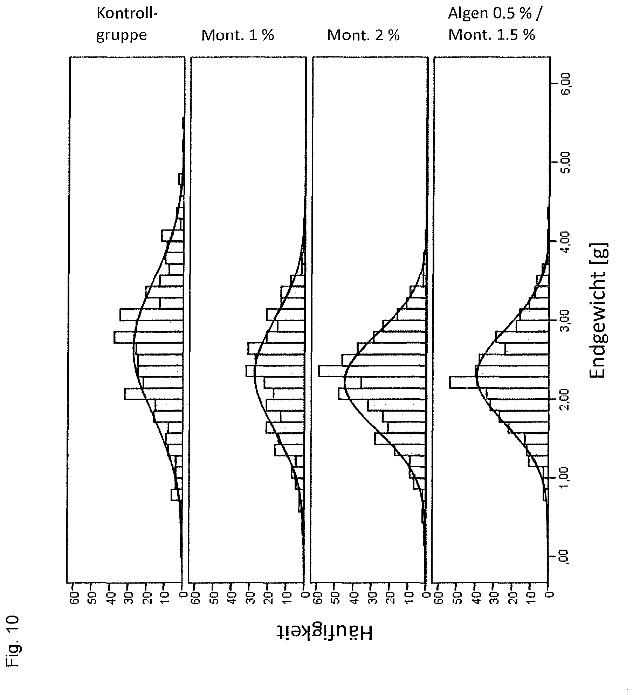

Die Größenverteilung des Endgewichts der Shrimps fiel in allen drei Versuchen (Fig. 10-12) bei den verschiedenen Behandlungsgruppen unterschiedlich aus. Bei Versuch I betrug das Durchschnitts-, Mindest- und Höchstgewicht (g) in der Kontroll-, 1 % Ton-(nicht-erfindungsgemäß), 2 % Ton- und 2 % Algen-/2 % Ton-Behandlungsgruppe jeweils 2,68 (0,13, 5,50), 2,36 (0,4, 4,2), 2,28 (0,24, 4,04) und 2,26 (0,75, 4,30). Die gleichmäßigste Größenverteilung wurde bei der 2 % Algen-/2 % Ton-Behandlungsgruppe (Fig. 10) beobachtet, die einen maximalen Gewichtsunterschied von 5,37 g (± 0,84) bei der Kontrollgruppe im Vergleich zu 3,8 g (± 0,7) bei der 1 % Ton-Behandlungsgruppe (nicht-erfindungsgemäß), 3,8 g (± 0,61) bei der 2 % Ton-Behandlungsgruppe und 3,55 g (± 0,60) bei der Mischungsbehandlungsgruppe ergab.

### Versuch II

Versuch II wurde 44 Tage lang durchgeführt, und die Ergebnisse sind in Tabelle 5 dargestellt. Während der Akklimatisierungsphase in einem separaten Haltetank verzeichneten wir ein Problem mit dem Biofilter, was zu Ammonium- (0,8 mg L⁻¹) und Nitritspitzen (0,135 mg L⁻¹) mit möglicherweise negativen Auswirkungen auf das Überleben der Postlarven der Shrimps in der darauffolgenden Zucht in den Kreislaufsystemen geführt hat. Während der Versuchsdurchführung waren die Wasserparameter stabil, mit nur geringen Schwankungen zwischen den vier Behandlungsgruppen (Tabelle 6).

Im Vergleich zu Versuch I hatten die Shrimplarven eine signifikant niedrigere Überlebensrate (Tabelle 5). Im Vergleich der vier Behandlungsgruppen hatte die Ton-/Algen-Behandlungsgruppe eine signifikant höhere Überlebensrate (54,75 %) als diejenigen Shrimps, die mit dem Kontrollfutter gefüttert wurden (33,00 %). Die 1 %-Tonmineral-Behandlung (nicht-erfindungsgemäß) (16,25 %) war niedriger und die 2 % Tonmineral-Behandlungsgruppe (32,00 %) zeigte kein signifikant besseres Überleben als die Kontrollgruppe. Alle Behandlungsgruppen (3,18-3,34 g) erreichten ein höheres durchschnittliches Endgewicht als die Kontrollgruppe (2,85 g), obwohl es keine signifikanten Unterschiede gab. Die mit dem Ton-/Algen-Mischfutter gefütterten Shrimps wiesen am Ende eine signifikant höhere Biomasse (151,25 g) und Gewichtszunahme (234 %) im Vergleich zur Kontrollgruppe (100 %) auf. Mit dem 2 %-Tonmineral-Futter gefütterte Shrimplarven zeigten am Ende eine geringfügig höhere Biomasse (73,45 g) und Gewichtszunahme (110 %) als die Kontrollgruppe und die 1 %-Behandlungsgruppe (nicht-erfindungsgemäß) (32,34 g; 43,7 %), jedoch ohne signifikante Unterschiede. Dies stand im Gegensatz zum Energiegehalt des Futters, der am höchsten im Kontrollfutter ausfiel im Vergleich zu den 1 % Ton- (-1,7 %), 2 % Ton- (-2,7 %) und den 2 % Ton-/2 %-Algen-Behandlungen (-7,3 %) (Tabelle 4). In Anbetracht des Energiegehalts lag die auf Basis der Energiezufuhr angepasste Zunahme der Biomasse bei 113 % (2 % Tonmineral), 44,5 % (1 % Tonmineral, nicht-erfindungsgemäß) und 251 % (2 % Ton/2 % Algen) im Vergleich zur Kontrollgruppe.

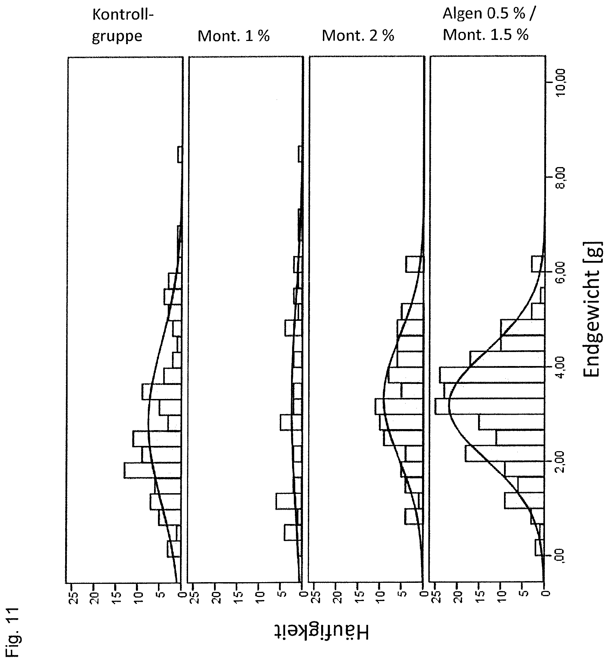

Die Größenverteilung des Endgewichts der Shrimps fiel auch am Ende von Versuch II zwischen den verschiedenen Behandlungsgruppen unterschiedlich aus (Fig. 11). Das Durchschnitts-, Mindest- und Höchstgewicht bei der Kontrollgruppe, 1 % Ton- (nicht-erfindungsgemäß), 2 % Ton- und 2 % Algen-/2%-Ton-Behandlungsgruppe lag jeweils bei 2,43 (0,14, 8,43), 2,96 (0,18, 8,43), 3,19 (0,67, 6,21) und 3,31 (0,14, 6,21). Die gleichmäßigste Größenverteilung wurde bei der 2 % Ton-Behandlungsgruppe beobachtet, die einen maximalen Gewichtsunterschied von 5,54 g (± 1,29) aufwies, gefolgt von der 2 % Algen-/2 % Ton-Behandlungsgruppe (6,07, ±1,15), der 1 %-Ton-Behandlungsgruppe (nicht-erfindungsgemäß) (8,25, ±2,20) und der Kontrollgruppe (8,29, ± 1,66, Fig. 11).

### Versuch III

Die Ergebnisse von Versuch III zeigten einen signifikanten Unterschied nur zwischen der Kontrollgruppe mit einem größeren Endgewicht von 1,14 g im Vergleich zu den anderen Futtern (Tabelle 5). Die 2 %-Tonmineral- (41,50 %) und die Ton-/Algen-Mischungsbehandlungsgruppen (45,00 %) hatten jedoch eine höhere Überlebensrate als die Kontrollgruppe (26,00 %). Infolge der höheren Überlebensrate und Shrimpanzahl in den Aquarien, derselben Futteraufnahme und eines leicht reduzierten Energiegehalts war das durchschnittliche Endgewicht der Shrimps in beiden Behandlungsgruppen niedriger als in der Kontrollgruppe. Die Gewichtszunahme jedoch (überlebende Shrimps x individuelles Endgewicht) war in beiden Behandlungsgruppen 30-35 % höher im Vergleich zur Kontrollgruppe.
Die SGR fällt in der Kontrollgruppe im Vergleich zu der 2 %-Behandlung- und der Ton-/Algen-Mischung etwas besser aus (Tabelle 5). Die Kontrollgruppe hatte eine höhere FCR von 1,37 im Vergleich zu einer FCR von 0,93 bei der 2 %-Behandlungsgruppe und 0,94 bei der Mischungsbehandlungsgruppe.

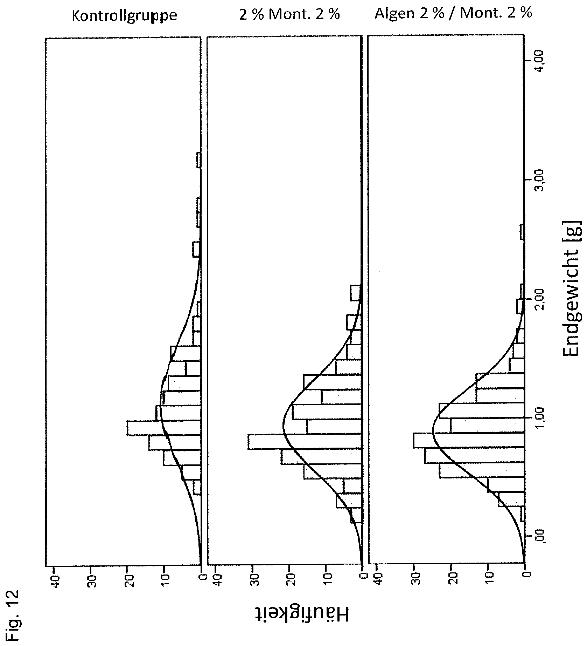

Die Größenverteilung des Endgewichts der Shrimps fiel auch am Ende von Versuch III (Fig. 12) zwischen den verschiedenen Behandlungsgruppen unterschiedlich aus. Das Durchschnitts-, Mindest- und Höchstgewicht bei der Kontrollgruppe, 2 % Ton- und 2 % Algen-/2 % Ton-Behandlungsgruppe lag jeweils bei 1,01 (0,44, 3,20), 0,87 (0,19, 2,12) und 0,84 (0,22, 2,60). Die gleichmäßigste Größenverteilung wurde bei der 2 %-Ton-Behandlungsgruppe (Fig. 12) beobachtet, die einen maximalen Gewichtsunterschied von 1,93 g (± 0,38) im Vergleich zu der anderen Behandlungsgruppe (2,36 g, ± 0,36) und der Kontrollgruppe (2,76 g, ± 0,47) ergab.

### Diskussion:

Tonminerale werden häufig als Futterinhaltsstoffe bei der Tierzucht eingesetzt, z.B. bei der Hühner-, Schweine- oder Rinderzucht. Es wurde nachgewiesen, dass sie als Futterzusatz positive Auswirkungen auf die behandelten Tiere haben. Zum Beispiel können Tonminerale die Gewichtszunahme, Futtereffizienz und Legeleistung bei der Geflügelzucht verbessern. Ein signifikanter Anstieg der durchschnittlichen Gewichtszunahme wurde unter Zusatz von 1-3 % Bentonit zum Futter beobachtet [30]. Ähnliche Ergebnisse fanden sich bei [31] bei Behandlungen mit 1-2 % Natriumbentonit. Sie beobachteten eine höhere Futteraufnahme und Gewichtszunahme sowie eine niedrigere FCR bei den behandelten Tieren. Andere Studien stellten einen Anstieg der durchschnittlichen täglichen Gewichtszunahme und Wachstumsentwicklung in der Schweinzucht fest. Ein leichter Anstieg der Futteraufnahme, Gewichtszunahme und Futterverwertung wurde unter Anwendung von 0,15 % Montmorillonit bei wachsenden Schweinen von [34] festgestellt. In einer zweiten Studie wurden diese Ergebnisse an Absetzern durch die Anwendung von 0,2 % Montmorillonit wiederholt [35]. Dies verlangt nach der Anwendung dieser Futterzusätze auch in der Aquakultur von Fischen und Shrimps.

Bei der Zucht von Wassertieren wurde Ton zur stärkeren Wassertrübung und zur Reduzierung der Bakterienlast im Zuchtwasser von Dorschlarven. Dabei beobachtete man indirekte positive Auswirkungen auf das Wachstum und Überleben [39]. Unter der Tonbehandlung hatten die Larven ein etwas höheres Trockengewicht und eine um 20-25 % bessere Überlebensrate. Untersucht wurde die Verwendung von Tonmineralen in Regenbogenforellenzuchten mit direkten positiven Auswirkungen auf Wachstum und Futterverwertung [40]. Das wichtigste Ergebnis dieser Studie war, dass die Wirksamkeit des Zusatzes sowohl von der Quelle des Tonminerals als auch von der verabreichten Menge abhing, was zu einem Anstieg der Gewichtszunahme von 10 % bei einem Tongehalt im Forellenfutter von 2 und 5 % führte. Dies liegt im Bereich der Ergebnisse der vorliegenden Studie, in der das Tonmineral von Friedland eine positive Auswirkung auf das Überleben, Gesamtendgewicht (110 %) und die FCR von *Litopenaeus vannamei* bei 2 % (mit oder ohne Algenzusatz) in drei unabhängigen Studien (Tabelle 5) zeigte. Andererseits reduzierte die Anwendung von 1 % Tonmineral (nicht-erfindungsgemäß) in der vorliegenden Studie die Wachstumsentwicklung der Shrimps im Vergleich zur Kontrollgruppe. Darüber hinaus wurde die Wirkung von Montmorillonit-Tonmineralen auf das Wachstum des Nil-Tilapia (*Oreochromis noloticus*) unter Anwendung von 0,15 % Montmorillonit im Fischfutter untersucht [37]. Dabei wurde eine leichte Steigerung der Wachstumsentwicklung und des Überlebens beobachtet. Unseren Ergebnissen zufolge könnte dies an einer Unterschätzung der benötigten Menge (0,15 gegenüber 2 %) oder der Art des verwendeten Tonminerals liegen.

Tonminerale haben viele medizinische und therapeutische Wirkungen auf die Gesundheit von Mensch und Tier [24, 25, 51] auf Grund wünschenswerter physikalischer und physikalischchemischen Eigenschaften wie einer hohen Adsorptionskapazität, spezifischen Oberfläche, Quellkapazität und Reaktivität gegenüber Säuren [24, 52]. In der pharmazeutischen Industrie werden sie in unterschiedlicher Form verwendet und entweder oral verabreicht oder äußerlich angewandt, z.B. als Antiseptika, Desinfektionsmittel und sogar als Entzündungshemmer [25]. Unter Montmorillonit wurden positive Auswirkungen auf die intestinale Mikroflora und antibakterielle Aktivitäten nachgewiesen [53, 54]. Der Einfluss von Montmorillonit auf die intestinale Mikroflora, Verdaulichkeit und Aktivitäten von Verdauungsenzymen im Nil-Tilapia, *Oreochromis niloticus,* wurde von [38] untersucht. Sie verzeichneten eine Verbesserung der Wachstumsentwicklung, Reduzierung der Anzahl an Aerobiern im Darm und Wirkungen auf die Zusammensetzung der intestinalen Mikroflora. Darüber hinaus verzeichneten sie eine Verbesserung der Verdaulichkeit von Trockensubstanz und Rohprotein sowie eine verbesserte enzymatische Aktivität der Protease, Amylase, Lipase und alkalinen Phosphatase in ihrer Gesamtheit. Die antibakterielle Wirkung von Montmorillonit führte zu positiven Enzymaktivitäten, die die Verdauung und Adsorption der Nahrung fördert [38]. Das besonders charakteristische Tonmineral Smektit-Montmorillonit aus Friedland, das in der vorliegenden Studie eingesetzt wurde, hat ähnliche zucht- und gesundheitsfördernden Effekte in der Tierzucht. Als Futterzusatz hat dieses spezifische Tonmineral Körpergewicht und Futteraufnahme in der Schweinzucht sowie Milchleistung und Futteraufnahme in der Rinderzucht gesteigert und zu einem signifikanten Anstieg der Gewichtszunahme (ca. 10 %) und Futteraufnahme in der Hühnerzucht geführt [43, 44, 45]. Ein signifikanter Rückgang von entzündlichen Darmerkrankungen bei Ratten durch *in* situ-Perfusion eines Extrakts dieses Tonminerals wurde berichtet [26]. [27] zufolge sind Tonminerale von Friedland hochwirksame Phosphatbinder und sollen sich positiv auf Nierenerkrankungen beim Menschen auswirken. Es liegen Berichte vor, wonach der Einsatz von Tonmineralen Ammonium aus dem Abwasser reduziert [55]. Die vorliegende Studie zeigt anhand höherer Überlebensraten solche positiven Effekte des Tonminerals auch auf eine wirbellose Tierart in Aquakultur sowie in einer Kreislaufanlage und unter Versuchsbedingungen.

Wir konnten signifikante Unterschiede bei Wachstumsentwicklung, Überlebensraten, SGR, FCR und abschließender Größenverteilung der getesteten Shrimps unter der Anwendung von Tonmineral aus Friedland beobachten. Die anfängliche Besatzdichte mit 200-300 Postlarven m⁻² war hoch, die Glasaquarien boten keinerlei größere Versteckmöglichkeiten, und eine hohe Ammoniumbelastung zu Beginn des zweiten Versuchs stellte für die Shrimps während der Versuchsdurchführungen ungünstige Bedingungen dar. Versuch I zeigte in der 2%-Montmorillonit-Behandlungsgruppe ein besseres Überleben (79,75 %), aber eine geringere Gewichtszunahme (262 g) im Vergleich zu 68 % und 265 g in der Kontrollgruppe. Dies steht im Gegensatz zu der Behandlung der Testfutter, die auf über 90 °C erhitzt wurden im Vergleich zum Kontrollfutter, was möglicherweise den Nährwert beeinträchtigte. Folglich hätte das Kontrollfutter ohne Futterzusatz und höheren Energiegehalt besser ausfallen müssen als die Testfutter mit Futterzusatz. Das ist eine gute Erklärung für das niedrigere Endgewicht und die höhere FCR, die bei den drei Testgruppen beobachtet wurde. Die Gesamtzunahme des Endgewichts der 2 %-Behandlungsgruppe ist das Ergebnis der höchsten Überlebensrate während dieses Versuchs.

Dieses Ergebnis aus dem ersten Versuch wird durch die beiden anderen Versuche untermauert, bei denen die Wasserbedingungen ungünstig für das Überleben der Postlarven war (Versuch II). Shrimps, die mit Futterzusatz behandelt wurden, zeigten ein signifikant besseres Überleben, obwohl der Energiegehalt des Futters um 1,7 und 7,3 % reduziert wurde. Insbesondere nach den hohen Ammoniumwerten während der Akklimatisierungsphase erzielten die mit dem Ton-/Algenfutter behandelten Shrimps 234 % der Gewichtszunahme im Vergleich zur Kontrollgruppe, und eine offensichtlich niedrigere FCR. Dies wurde in Versuch III wiederholt, mit der besten Wachstumsentwicklung unter der Behandlung von 2 % Montmorillonit mit oder ohne Mikroalgenpulver. Wir können schlussfolgern, dass bei drei verschiedenen Szenarien und Verwendung von unterschiedlichen Chargen von Postlarven die Überlebensraten und die Gesamtgewichtszunahme unter der Anwendung von 2 % Montmorillonit von Friedland einen Anstieg verzeichnete. Andererseits zeigte der 1 %-Futterzusatz (nicht-erfindungsgemäß) eine geringere Entwicklung im Vergleich zur Kontrollgruppe, was die Aussage von [40] bestätigt, dass sich nicht nur die Herkunft, sondern auch die Konzentration auf die Wachstumsentwicklung in Regenbogenforellen auswirkt. Auch bei wirbellosen Wassertieren könnte die Verdaulichkeit von Nährstoffen durch den Ton-Futterzusatz unterstützt werden, wie von früheren Autoren beschrieben [37, 38, 53], was auch für die höheren Wirbeltiere gilt [34, 35, 43, 44, 45].

Eine wichtige Beobachtung ist die kleinere Größenverteilung der Tonmineral-Anwendungsgruppen nach den drei unabhängigen Versuchen, wonach der 2 %-Tonzusatz am besten abschnitt und die gleichmäßigste Größenverteilung der Shrimps ergab (Fig. 10-12). Bei Versuch II schnitt der 2 % Ton-/2 % Algen-Futterzusatz am besten ab, während der 2 %-Ton im Ergebnis der Größenverteilung nach Versuch I und III ähnlicher war. In Anbetracht der höheren Überlebensraten und der Beobachtung, dass schwache Garnelen unmittelbar von den anderen Tieren in den Aquarien gefressen wurden, könnte weniger Kannibalismus der Grund für dieses Ergebnis sein. Hohe Besatzdichten an Shrimps führen vermehrt zu Interaktionen zwischen den einzelnen Shrimps, was zu Kannibalismus und steigenden Mortalitätsraten führt [56, 57, 58]. In unseren Versuchen sind die Besatzdichten von 200-300 Shrimps pro m² vergleichbar mit Super-Intensiv-Haltungsbedingungen in der Aquakultur. Darüber hinaus sind Glasaquarien ohne Substrat eine extreme Umgebung für die Shrimps, wodurch sie besonders anfällig für Kannibalismus sind, was somit zu einer hohen Größenverteilung und niedrigem Überleben führt. Unter solch super-intensiven Bedingungen ist es notwendig, einen gesunden Bestand mit nicht anfälligen und widerstandsfähigen Tieren zu halten, der möglicherweise durch die Tonminerale von Friedland mit und ohne die Mikroalgen *Chlorella vulgaris* gefördert werden kann.

Die verwendete Mikroalge *Chlorella vulgaris* stammte aus einem Bioreaktor, der an ein mit CO₂ gespeistes Kraftwerk angeschlossen war. Algen als Futterzusatz in der Aquakultur führte zu positiven Auswirkungen auf die kultivierten Organismen und unterstützte beispielsweise allgemein gesundheitsfördernde, antibakterielle, antifungale und antivirale Effekte... oder die Ergänzung mit Nährstoffen, Vitaminen und anderen Inhaltsstoffe [39, 59, 60, 61]. Shrimps sind natürliche Algenabweider in Garnelenteichen, und es wurde von verschiedenen Algen berichtet, die für die Zucht von Shrimplarven von Bedeutung sind [62, 63]. Die Tonminerale von Friedland können für eine effiziente und kostengünstige Gewinnung von Mikroalgensuspension verwendet werden. Wir konnten zeigen, dass eine Kombination der Mikroalgen mit dem vorteilhaften Tonmineral von Friedland auf die Shrimpzucht anwendbar ist, und darüber hinaus eine direkte Verwendung von aus dem Bioreaktor produzierten Mikroalgen für eine gesunde Garnelenaquakultur ermöglicht.

### Schlussfolgerung:

Whiteleg-Shrimp-Postlarven (*Litopenaeus vannamei*), 12 Tage nach dem Schlüpfen (PL 12), wurden mit verschiedenen Futtern einschließlich Montmorillonit-Tonmineralen von Friedland als Futterzusatz mit oder ohne Zusatz der Grünalge *Chlorella vulgaris* gefüttert. Bei Anwendung von 2 % Tonmineralen wurden positive Effekte auf die Wachstumsparameter bei den Shrimps festgestellt. Der Zusatz von 1 % Tonmineralen (nicht-erfindungsgemäß) zum Futter hatte keine positiven Auswirkungen bzw. reduzierte die Entwicklung im Vergleich zur Kontrollgruppe. Die Zugabe von Mikroalgen zu den Futtern (Mischung mit Tonmineral) zeigte vergleichbare Effekte auf das Shrimpwachstum wie die Anwendung von 2 % Montmorillonit. Montmorillonit-Tonmineral von Friedland als Futterzusatz ergab eine höhere Zunahme der Biomasse nach der Versuchsdurchführung. Trotz einer reduzierten individuellen Gewichtszunahme im Vergleich zur Kontrollgruppe, die auch auf einen verminderten Energiegehalt des Futters zurückzuführen ist, ergaben höhere Überlebensraten und eine gleichmäßigere Größenverteilung von *L*. *vannamei* die beste Entwicklung der Shrimps unter 2 % Montmorillonit. Die homogenere Heterogenität der Shrimpgröße in Kombination mit *Chlorella vulgaris* und Montmorillonit (2 %/2 %) zeigte auch eine positive Auswirkung des Futters auf Shrimpkohorten unter super-intensiven Versuchsbedingungen. Wir leiten dies aus einem unterdrückten Kannibalismus in den Aquarien her. Abschließend lässt sich sagen, dass Montmorillonit-Tonminerale von Friedland vorteilhafte Auswirkungen auf das Überleben und die Entwicklung von Whiteleg-Shrimps (*Litopenaeus vannamei*) in einer Konzentration von 2 % mit und ohne Zusatz der Grünalge *Chlorella vulgaris* haben.

### Zitierte Literaturquellen:

1. FAO. World Wide Web electronic publication. 2014. www.fao.org
2. Wyban JA, Swingle JS, Sweeney JN, Pruder GD. Development and commercial performance of high health shrimp using specific pathogen free (SPF) broodstock Penaeus vannamei. Orlando. Proceedings of the Special session on Shrimp Farming, The World Aquaculture Society. Aquaculture. 1992; 92: 254-260.
3. Moriarty DJW. Diseases control in shrimp aquaculture with probiotic bacteria. In: Microbial Biosystems: New Frontiers. Proceedings of the 8th International Symposium on Microbial Ecology (ed. by Bell C.R., Brylinsky M. & Johnson-Green P.). Atlantic Canada Society for Microbial Ecology, Halifax, Canada. 1999.
4. Nhan DT, Wille M, Schryver PD, Defoirdt T, Bossier P, Sorgeloos P. The effect of poly β-hydroxybutyrate on larviculture of the giant freshwater prawn Macrobrachium rosenbergii. Aquaculture. 2010; 302: 76-81.
5. Newaj-Fyzul A, Al-Harbi AH, Austin B. Review: Developments in the use of probiotics for disease control in aquaculture. Aquaculture. 2014; 431: 1-11. DOI: 10.1016/j.aquaculture.2013.08.026.
6. Rairat T, Chuchird N, Limsuwan C. Effect sangrovit WS on growth, survival and prevention of Vibrio harveyi in rearing of Pacific white shrimp (Litopenaeus vannamei). Kasetsart University Fisheries Research Bulletin. 2013; 37 (1): 19-29.
7. Holmström K, Gräslund S, Wahlström A, Poungshompoo S, Bengtsson BE, Ka Antibiotic use in shrimp farming and implications for environmental impacts an health. International Journal of Food Science and Technology. 2003; 38: 255-2
8. Cabello FC. Heavy use of prophylactic antibiotics in aquaculture: a growing problem for human and animal health and for the environment. Environmental Microbiology. 2006; 8 (7): 1137-1144.
9. Defoirdt T, Boon N, Sorgeloos P, Verstraete W, Bossier P. Alternatives to antibiotics to control bacterial infections: luminescent vibriosis in aquaculture as an example. Trends in Biotechnology. 2007; 25 (10): 472-9.
10. Defoirdt T, Sorgeloos P, Bossier P. Alternatives to antibiotics for the control of bacterial disease in aquaculture. Current Opinion in Microbiology. 2011; 14: 251-258. DOI 10.1016/j.mib.2011.03.004.
11. Burridge L, Weis JS, Cabello F, Pizarro J, Bostick K. Chemical use in salmon aquaculture: A review of current practices and possible environmental effects. Aquaculture. 2010; 306: 7-23.
12. Felix N, Sudharsan M. Effect of glycine betaine, a feed attractant affecting growth and feed conversion of juvenile freshwater prawn Macrobrachium rosenbergii, Aquaculture Nutrition. 2004; 10: 193-197.
13. Huang X, Zhou H, Zhang H. The effect of Sargassum fusiforme polysaccharide extracts on vibriosis resistance and immune activity of the shrimp, Fenneropenaeus chinensis. Fish & Shellfish Immunology. 2006; 20: 750-757.
14. Nimrat S, Boonthai T, Vuthiphandchai V. Effects of probiotic forms, compositions of and mode of probioticadministration on rearing of Pacific white shrimp (Litopenaeus vannamei) larvae and postlarvae. Animal Feed Science and Technology. 2011; 169: 244-258. doi:10.1016/j.anifeedsci.2011.07.003.
15. Rico A, Phu TM, Satapornvanit K, Min J, Shahabuddin AM, Henriksson PJG et al. Use of veterinary medicines, feed additives and probiotics in four major internationally traded aquaculture species farmed in Asia. Aquaculture. 2013; 412-413: 231-243. http://dx.doi.org/10.1016/j.aquaculture.2013.07.028.
16. New MB. A review of dietary studies with shrimp and prawns. Aquaculture. 1976; 9: 101-144.
17. Gräslund SK, Holmström A, Wahlström A. A field survey of chemicals and biological products used in shrimp farming. Marine Pollution Bulletin. 2003; 46: 81-90.
18. Davis DA, Samocha TM, Bullis RA, Patnaik S, Browdy C, Stokes A et al. Practical diets for Litopenaeus vannamei, (Boone. 1931): working towards organic and/or all plant production diets. In: Avancesen Nutricion Acuicola VII. Memoriasdel VII Simposium Internacional de Nutricion Acuicola. 16-19 Noviembre, 2004. Hermosillo, Sonora, Mexico.
19. Jaime-Ceballos B, Villarreal H, Garcia T, Perez-Jar L, Alfonso E. Effect of Spirulina platensis meal as feed additive on growth, survival and development in Litopenaeus schmitti shimplarvae. Revista de Investigaciones Marinas. 2005; 26(3): 235-241.
20. Patnaik S, Samocha TM, Davis DA, Bullis RA, Browdy CL. The use of HUFA-rich algal meals in diets for Litopenaeus vannamei. Aquaculture Nutrition. 2006; 12: 395-401.
21. Hanel R, Broekman D, Graaf Sde, Schnack D. Partial Replacement of Fishmeal by Lyophylized Powder of the Microalgae Spirulina platensis in Pacific White Shrimp Diets. The Open Marine Biology Journal. 2007; 1: 1-5.
22. Ju ZY, Forster IP, Dominy WG. Effects of supplementing two species of marine algae or their fractions to a formulated diet on growth, survival and composition of shrimp (Litopenaeus vannamei). Aquaculture. 2009; 292: 237-243.
23. Ju ZY, Deng DF, Dominy W. A defatted microalgae (Haematococcus pluvialis) meal as a protein ingredient to partially replace fishmeal in diets of Pacific white shrimp (Litopenaeus vannamei, Boone, 1931). Aquaculture. 2012; 354: 50-55.
24. Carretero MI, Pozo M. Clay and non-clay minerals in the pharmaceutical industry Part I. Excipients and medical applications. Applied Clay Science. 2009; 46: 73-80.
25. Carretero MI, Pozo M. Clay and non-clay minerals in the pharmaceutical and cosmetic industries Part II. Activeingredients. Applied Clay Science. 2010; 47: 171-181.
26. Breitrück A, Sparmann G, Mitzner S, Kerkhoff C. Establishment of a novel extracorporeal bowel model to study luminal approaches to treat inflammatory bowel disease. Disease Models & Mechanisms. 2013; 6 (6): 1487-1493. doi:10.1242/dmm.011734.
27. Fraunhofer. Treating chronic kidney disease using clay minerals. Research News of The Fraunhofer-Gesellschaft. 2014; 01.
28. Huwig A, Freimund S, Käppeli O, Dutler H. Mycotoxin detoxication of animal feed by different adsorbents. Toxicology Letters. 2001; 122(2): 179-188. DOI: 10.1016/S0378-4274(01)00360-5.
29. Quisenberry JH. The Use of Clay in Poultry Feed. Clays and Clay Minerals. 1968; 16: 267-270.
30. Tauqir NA, Nawaz H. Performance and Economics of Broiler Chicks Fed on Rations Supplemented with Different Levels of Sodium Bentonite. International Journal of Agriculture & Biology. 2001; 3(1): 149-150.
31. Salari H, Kermanshahi H, Moghaddam HN. (2006) Effect of Sodium Bentonite and Comparison of Pellet vs Mash on Performance of Broiler Chickens. International Journal of Poultry Science. 2006; 5(1): 31-34.
32. Colling GF, Thomasson SA, Ku PK, Miller ER. Sodium Bentonite in Swine Diets. Journal of animal science. 1980; 50(2): 272-277.
33. Lindemann MD, Blodgett DJ, Kornegay ET, Schurig GG. Potential ameliorators of aflatoxicosis in weanling/growing swine. Journal of Animal Science. 1993; 71(1): 171-178.
34. Hu CH, Xia MS, Xu ZR, Xiong L. Effects of Copper-bearing Montmorillonite on Growth Performance and Digestive Function of Growing Pigs. Asian-Australas. J. Anim. Sci. 2004; 17: 1714-1720.
35. Hu CH, Gu LY, Luan ZS, Song J, Zhu K. Effects of montmorillonite-zinc oxide hybrid on performance, diarrhea, intestinal permeability and morphology of weanling pigs. Animal Feed Science and Technology. 2012; 177: 108-115.
36. Walz LS, White TW, Fernandez JM, Gentry LR, Blouin DC, Froetschel MA. Effects of fish meal and sodium bentonite on daily gain, wool growth, carcass characteristics, and ruminal and blood characteristics of lambs fed concentrate diets. Journal of Animal Science. 1998; 76(8): 2025-2031.
37. Hu CH, Xu Y, Xia MS, Xiong L, Xu ZR. Effects of Cu2+-exchanged montmorillonite on growth performance, microbial ecology and intestinal morphology of Nile tilapia (Oreochromis niloticus). Aquaculture. 2007; 270: 200-206.
38. Hu CH, Xu Y, Xia MS, Xiong L, Xu ZR. Effects of Cu2+-exchanged montmorillonite on intestinal microflora, digestibility and digestive enzyme activities of Nile tilapia. Aquaculture Nutrition. 2008; 14: 281-288.
39. Attramadal KJK, Tøndel B, Salvesen I, Øie G, Vadstein O, Olsen Y. Ceramic clay reduces the load of organic matter and bacteria in marine fish larval culture tanks. Aquacultural Engineering. 2012; 49: 23-34.
40. Smith RR. Recent advances in nutrition: clay in trout diets. Salmonid. 1980; 4 (4):16-18.
41. FIM Biotech (pers. comm.). FIM Biotech GmbH, Am Kupfergraben 6a, D-10117 Berlin. Germany.
42. SPSS Inc. Statistic Software Package, Chicago, IL, USA. 2013.
43. Männer K. Efficacy and tolerance of supplemented FIMIX E 558 (Bentonit-Montmorillionit E 558) in broiler chickens from 1 to 35 d of age. Tolerance study of FIMIX E 558 (code: GM 4/13), Report to FIM Biotech GmbH, Institute of Animal Nutrition, University of Berlin. 2013a.
44. Männer K. Tolerance of supplemented FIMIX E 558 (Bentonit-Montmorillionit E 558) in dairy cattle during a 56-day-feeding period. Tolerance study of FIMIX E 558 (code: C 1/13), Report to FIM Biotech GmbH, Institute of Animal Nutrition, University of Berlin. 2013b.
45. Männer K. Tolerance of supplemented FIMIX E 558 (Bentonit-Montmorillionit E 558) in multiparous sows during one complete reproductive cycle. Tolerance study of FIMIX E 558 (code: SL 4/13), Report to FIM Biotech GmbH, Institute of Animal Nutrition, University of Berlin. 2013c.
46. Bautista MN, Lavilla-Pitogo CR, Subosa PF. Aflatoxin B, Contamination of Shrimp Feeds and its Effect on Growth and Hepatopancreas of Pre-adult Penaeus monodon. Journal of the Science of Food and Agriculture. 1994; 65: 5-11.
47. Ostrowski-Meissner HT, LeaMaster BR, Duerraq EO, Walsh WA. Sensitivity of the Pacific white shrimp, Penaeus vannamei, to aflatoxin B1. Aquaculture. 1995; 131: 155-164.
48. Henning KH, Kasbohm J. Mineral composition and genesis of fine-grained sediments of Quaternary and Praequartenary in East Germany with special emphasis on "Friedlander Clay Minerals". Institute of Geological Sciences, Ernst-Moritz-Arndt-University of Greifswald, Annual Meeting of the DTTG. 1998; Report 6: 147-167 [in Deutsch].
49. FIM Biotech. FIM Biotech GmbH, Am Kupfergraben 6a, D-10117 Berlin, Germany. 2012.
50. Kumpulainen S, Kiviranta L. Mineralogical and Chemical Characterization of Various Bentonite and Smectite-Rich Clay Materials, Finland, Clays in Natural & Engineered Barriers for Radioactive Waste Confinement, 4TH International Meeting-March 2010 NANTES, FRANCE, P/GEO/PC/06.
51. Slamova R, Trckova M, Vondruskova H, Zraly Z, Pavlik I. Clay Minerals in animal nutrition. Applied Clay Science. 2011; 51: 395-398.
52. Ayari F, Srasra E, Trabelsi-Ayadi M. Characterization of bentonitic clays and their use as adsorbent. Desalination. 2005; 185: 391-397.
53. Droy-Lefain MT, Drouet Y, Schatz B. Sodium glycodeoxycholate and spinability of gastrointestinal mucus: protective effect of smectite. Gastroenterology. 1985; 88(2): 1369.
54. Holešová S, Valášková M, Hlaváč D, Madejovä J, Samlíková M, Tokarský J, Pazdziora E. Antibacterial kaolinite/urea/chlorhexidine nanocomposites

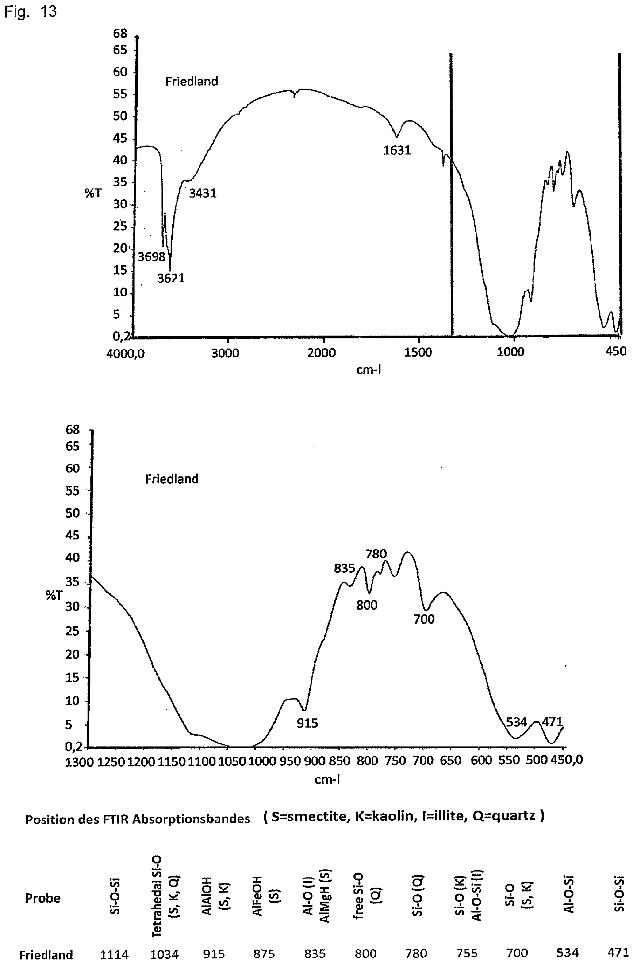

In Fig. 13 ist eine IR-Spektroskopie-Analyse einer Friedland Ton Probe dargestellt. Der typische Fingerprintbereich liegt zwischen 1300 und 450 cm⁻¹, der in der rechten Graphik vergrößert dargestellt ist.

## Patentansprüche

1. Verwendung von mindestens einem Wechsellagerungstonmineral aus Montmorillonit und Illit/Muskovit als Futterzusatzstoff und/oder als Ergänzungsfutter für Garnelen, **dadurch gekennzeichnet, dass**
- das Wechsellagerungstonmineral vor seiner Verwendung auf eine mittlere Teilchengröße von 0,1 und 10 µm zerkleinert wird,
- thermisch bei einer Temperatur zwischen 50 °C und 200°C über einen Zeitraum von 10 bis 60 min behandelt wird, und
- wobei 2 Gew% des Wechsellagerungstonminerals aus Montmorillonit und Illit/Muskovit bezogen auf die Gesamtmenge eines den für Garnelen zugeführten Futtermittels verabreicht werden.

2. Verwendung nach Anspruch 1, **dadurch gekennzeichnet, dass** das mindestens eine Wechsellagerungstonmineral vermischt mit oder separat zu einem Futtermittel für Garnelen verabreicht wird.

3. Verwendung nach einem der vorhergehenden Ansprüche, **dadurch gekennzeichnet, dass** das Wechsellagerungstonmineral nach der Zerkleinerung eine mittlere Teilchengröße von 0,5 bis 5 µm, bevorzugt 1 bis 3 µm aufweist.

4. Verwendung nach einem der vorhergehenden Ansprüche, **dadurch gekennzeichnet, dass** das Wechsellagerungstonmineral eine spezifische innere BET-Oberfläche von 50 m²/g bis 500 m²/g, bevorzugt von 100 m²/g bis 400 m²/g, insbesondere bevorzugt von 200 m²/g bis 300 m²/g.

5. Verwendung nach einem der vorhergehenden Ansprüche, **dadurch gekennzeichnet, dass** das Wechsellagerungstonmineral zerkleinert wird und anschließend thermisch bei einer Temperatur zwischen 70 °C und 150 °C, bevorzugt zwischen 90°C und 125°C über einen Zeitraum von 15 bis 45 min behandelt wird.

6. Verwendung nach einem der vorhergehenden Ansprüche, **dadurch gekennzeichnet, dass** das Wechsellagerungstonmineral vor der Verwendung bei einer Temperatur zwischen 400 und 800°C über einen Zeitraum von 60 min bis 240 min calciniert wird.

7. Verwendung nach einem der vorhergehenden Ansprüche, **dadurch gekennzeichnet, dass** das Tonmineral ein Fe²⁺ / Fe³⁺ - Verhältnis zwischen 0,3 und 1, 0, bevorzugt 0,45 und 1,0 aufweist.

8. Verwendung nach einem der vorhergehenden Ansprüche, **dadurch gekennzeichnet, dass** das Tonmineral 50-60 Gew% Montmorillonit-Muskovit-WL, 15-25 Gew% Illit/Muskovit, 5-9 Gew% Kaolinit/Chlorit, 10-20 Gew% Quarz, 1-2 Gew% Calcit, 0,9-1,5 Gew% Dolomit, 0,9-1,9 Gew% Feldspat, 0,9-2,0 Gew% Pyrit und 0,6-1,0 Gips umfasst.

9. Verwendung nach mindestens einem der vorhergehenden Ansprüche, **dadurch gekennzeichnet, dass** das Tonmineral folgende mineralische Zusammensetzung hat:
(Na_{0.58}Ca_{0.03}Mg_{0.10}Al_{2.22}Fe³⁺_{1.09}Fe²⁺_{0.18}Mg_{0.59}Si_{7.80}Al_{0.20}O₂₀(OH)₄)

10. Verwendung nach einem der vorhergehenden Ansprüche, **dadurch gekennzeichnet, dass** das Wechsellagerungsmineral mit zweiwertigen Kationen, insbesondere mit Mg²⁺ Ca²⁺,Fe²⁺ Ionen, bevorzugt Mg²⁺ -Ionen angereichert wird.

11. Verwendung nach einem der vorhergehenden Ansprüche, **dadurch gekennzeichnet, dass** das Wechsellagerungstonmineral mit mindestens einer weiteren organischen Substanz ausgewählt aus einer Gruppe enthaltend Bakterien, Pilze, Algen oder Protozoen, Antigene bzw. Immunostimulanzien für die Aquakultur modifiziert ist.

12. Verwendung nach Anspruch 11, **dadurch gekennzeichnet, dass** das Wechsellagerungstonmineral mit mindestens einer Mikroalgenart modifiziert ist.

## Claims

1. Use of at least one mixed layer clay mineral comprising montmorillonite and illite/muscovite as feed additive and/or as supplementary feed for shrimps, **characterized in that**
- before its use, the mixed layer clay mineral is comminuted to a mean particle size between 0.1 and 10 µm,
- is thermally treated at a temperature between 50 °C and 200 °C over a period of 10 to 60 min, and
- wherein 2 wt-% of the mixed layer clay mineral comprising montmorillonite and illite/muscovite are administered, based on the total amount of a feedstuff supplied to the shrimps.

2. Use according to claim 1, **characterized in that** the at least one mixed layer clay mineral is administered mixed with or separately from a feedstuff for shrimps.

3. Use according to any of the preceding claims, **characterized in that** after comminution the mixed layer clay mineral has a mean particle size of 0,5 to 5 µm, preferably 1 to 3 µm.

4. Use according to any of the preceding claims, **characterized in that** the mixed layer clay mineral has a specific inner BET surface area of 50 m²/g to 500 m²/g, preferably of 100 m²/g to 400 m²/g, in particular preferably of 200 m²/g to 300 m²/g.

5. Use according to any of the preceding claims, **characterized in that** the mixed layer clay mineral is comminuted and subsequently thermally treated at a temperature between 70 °C and 150 °C, preferably between 90 °C and 125 °C over a period of 15 to 45 min.

6. Use according to any of the preceding claims, **characterized in that** the mixed layer clay mineral is calcined before use at a temperature between 400 and 800 °C over a period of 60 min to 240 min.

7. Use according to any of the preceding claims, **characterized in that** the clay mineral has a Fe²⁺/Fe³⁺ ratio between 0.3 and 1.0, preferably between 0.45 and 1.0.

8. Use according to any of the preceding claims, **characterized in that** the clay mineral comprises 50-60 wt-% of montomorillonite-muscovite-WL, 15-25 wt-% of illite/muscovite, 5-9 wt-% of kaolinite/chlorite, 10-20 wt-% of quartz, 1-2 wt-% of calcite, 0.9-1.5 wt-% of dolomite, 0.9-1.9 wt-% of feldspar, 0.9-2.0 wt-% of pyrite, and 0.6-1.0 wt-% of gypsum.

9. Use according to at least one of the preceding claims, **characterized in that** the clay mineral has the following mineral composition:
(Na_{0.58}Ca_{0.03}Mg_{0.10}Al_{2.22}Fe³⁺_{1.09}Fe²⁺_{0.18}Mg_{0.59}Si_{7.80}Al_{0.20}O₂₀(OH)₄)

10. Use according to any of the preceding claims, **characterized in that** the mixed layer clay mineral is enriched with divalent cations, in particular with Mg²⁺, Ca²⁺, Fe²⁺ ions, preferably Mg²⁺ ions.

11. Use according to any of the preceding claims, **characterized in that** the mixed layer clay mineral is modified with at least one further organic substance selected from a group including bacteria, fungi, algae or protozoa, antigens or immunostimulants for aquaculture.

12. Use according to claim 11, **characterized in that** the mixed layer clay mineral is modified with at least one microalgal species.

## Revendications

1. Utilisation d'au moins un minéral argileux à couche mixte comprenant de la montmorillonite et de l'illite/muscovite comme additif alimentaire et/ou comme aliment complémentaire pour crevettes,
**caractérisée en ce que**
- avant son utilisation, le minéral argileux à couche mixte est broyé à une taille particulaire moyenne entre 0,1 et 10 µm,
- est traité thermiquement à une température entre 50 °C et 200 °C sur une période de 10 à 60 min, et
- dans laquelle 2 % en poids du minéral argileux à couche mixte comprenant de la montmorillonite et de l'illite/muscovite sont administrés, sur la base de la quantité totale d'un aliment fourni aux crevettes.

2. Utilisation selon la revendication 1, **caractérisée en ce que** l'on administre l'au moins un minéral argileux à couche mixte avec ou séparément d'un aliment pour crevettes.

3. Utilisation selon l'une quelconque des revendications précédentes, **caractérisée en ce qu'**après le broyage, le minéral argileux à couche mixte présente une taille particulaire moyenne de 0,5 à 5 µm, de préférence de 1 à 3 µm.

4. Utilisation selon l'une quelconque des revendications précédentes, **caractérisée en ce que** le minéral argileux à couche mixte présente une aire de surface BET spécifique intérieure de 50 m²/g à 500 m²/g, de préférence de 100 m²/g à 400 m²/g, en particulier de préférence de 200 m²/g à 300 m²/g.

5. Utilisation selon l'une quelconque des revendications précédentes, **caractérisée en ce que** le minéral argileux à couche mixte est broyé et ensuite traité thermiquement à une température entre 70 °C et 150 °C, de préférence entre 90 °C et 125 °C sur une période de 15 à 45 min.

6. Utilisation selon l'une quelconque des revendications précédentes, **caractérisée en ce que** le minéral argileux à couche mixte est calciné avant l'utilisation à une température entre 400 et 800 °C sur une période de 60 min à 240 min.

7. Utilisation selon l'une quelconque des revendications précédentes, **caractérisée en ce que** le minéral argileux présente un rapport Fe²⁺/Fe³⁺ entre 0,3 et 1,0, de préférence entre 0,45 et 1,0.

8. Utilisation selon l'une quelconque des revendications précédentes, **caractérisée en ce que** le minéral argileux comprend 50-60 % en poids de montomorillonite-muscovite-WL, 15-25 % en poids de illite/muscovite, 5-9 % en poids de kaolinite/chlorite, 10-20 % en poids de quartz, 1-2 % en poids de calcite, 0,9-1,5 % en poids de dolomite, 0,9-1,9 % en poids de feldspath, 0,9-2.0 % en poids de pyrite, et 0,6-1,0 % en poids de plâtre.

9. Utilisation selon au moins l'une quelconque des revendications précédentes, **caractérisée en ce que** le minéral argileux présente la composition minérale suivante :
(Na_{o,58}Ca_{0,03}Mg_{0,10}Al_{2,22}Fe³⁺_{1,09}Fe²⁺_{0,18}Mg_{0,59}Si_{7,80}Al_{0,20}O₂₀(OH)₄)

10. Utilisation selon l'une quelconque des revendications précédentes, **caractérisée en ce que** le minéral argileux à couche mixte est enrichi en cations divalents, en particulier en ions Mg²⁺, Ca²⁺, Fe²⁺, de préférence en ions Mg²⁺.

11. Utilisation selon l'une quelconque des revendications précédentes, **caractérisée en ce que** le minéral argileux à couche mixte est modifié avec au moins une autre substance organique choisie parmi un groupe comprenant des bactéries, des champignons, des algues ou des protozoaires, des antigènes ou des immunostimulants pour l'aquaculture.

12. Utilisation selon la revendication 11, **caractérisée en ce que** le minéral argileux à couche mixte est modifié avec au moins une espèce de microalgue.
